# EUROPEAN PATENT APPLICATION

(11) **EP 4 210 344 A1**
(43) Date of publication of application: **12.07.2023**
(21) Application number: 21871350.1
(22) Date of filing: 15.09.2021
(51) Int. Cl.: H04R 1/10

(54) **AUDIO PROCESSING METHOD, COMPUTER-READABLE STORAGE MEDIUM, AND ELECTRONIC DEVICE**

(30) Priority: 23.09.2020 CN 202011008015
(71) Applicant: Huawei Technologies Co., Ltd., Shenzhen, Guangdong 518129 (CN)
(72) Inventor: YANG, Xiao, Shenzhen, Guangdong 518129 (CN); TIAN, Lisheng, Shenzhen, Guangdong 518129 (CN); LI, Xiao, Shenzhen, Guangdong 518129 (CN); ZHANG, Haihong, Shenzhen, Guangdong 518129 (CN); ZHU, Tong, Shenzhen, Guangdong 518129 (CN)
(74) Representative: Huawei European IPR
(86) International application number: PCT/CN2021/118398
(87) International publication number: WO 2022/062979

(57) **Abstract**

This application provides an audio processing method, a computer-readable storage medium, and an electronic device. The audio processing method according to an implementation includes: An electronic device starts a live broadcast application, where the live broadcast application publishes audio and receives feedback audio associated with the audio; the electronic device receives an audio signal including an accompaniment audio signal sent by an accompaniment audio providing device, where the received audio signal is used as a first audio signal to be published, or the received audio signal is processed and a processed signal is used as a first audio signal to be published; the electronic device publishes the first audio signal by using the live broadcast application, and receives a second audio signal used as feedback audio through the internet by using the live broadcast application; the electronic device mixes the first audio signal and the second audio signal to obtain a third audio signal; and the electronic device sends, through wireless communication, the third audio signal to a wireless headset associated with the electronic device, to perform listening.

## Description

This application claims priority to Chinese Patent Application No. 202011008015.4, filed with the China National Intellectual Property Administration on September 23, 2020 and entitled "AUDIO PROCESSING METHOD, COMPUTER-READABLE STORAGE MEDIUM, AND ELECTRONIC DEVICE", which is incorporated herein by reference in its entirety.

### TECHNICAL FIELD

This application relates to the field of internet technologies, and specifically, to an audio processing method, a computer-readable storage medium, and an electronic device.

### BACKGROUND

With development of network technologies, live broadcast gradually becomes a popular application, and there are many users. Some internet celebrity streamers even have millions of "fans". A live broadcast mode can give full play to advantages of the mobile internet and can live-broadcast content such as product display, a conference, an assessment, a survey, an interview, a lesson, and training. After live broadcast is completed, audio and video content of the live broadcast can be replayed or played on demand at any time to maximize value of the live broadcast content.

Therefore, to improve experience during live broadcast, high-quality onsite audio and videos need to be collected. At present, main devices for collecting audio and videos include mobile phones and live broadcast audio cards.

For video collection, performance of a camera of a mobile phone has reached a very high level, regardless of a front-facing camera or a rear-facing camera. Using a mobile phone for image collection can technically meet a requirement, and a streamer does not need to purchase an independent camera device for live broadcast.

However, audio collection on a live broadcast site is different. Due to a size limitation, a professional sound collection structure cannot be designed inside a mobile phone, and a large-sized microphone component cannot be used inside the mobile phone. In addition, during live broadcast, streamer audio of a live streamer usually needs to be mixed with background accompaniment audio to form to-be-published audio for publishing, and the streamer needs to hear audio fed back by remote audiences.

### SUMMARY

In view of this, this application provides an audio processing method, an electronic device, and a computer-readable storage medium. The audio processing method does not have a delay problem, relates to few connection lines, and is easy to implement.

Through research, the applicant finds that wide and rapid popularization of wireless headsets is a trend in the industry. As a sales volume of binaural true wireless Bluetooth headsets (TWS) gradually increases, an increasing quantity of users use such headsets.

The TWS headset features a small size, does not have a connection line, and does not affect a user action.

In addition, when the TWS headset is used to collect a sound, because the TWS headset is worn on an ear and a position of the TWS headset is basically fixed, the TWS headset is very close to a human mouth, and a relative position of the TWS headset and the human mouth is basically fixed. This shows a unique advantage of collecting a human voice by using the TWS headset. Based on this, the applicant proposes a live audio processing solution in which a wireless headset, especially a TWS headset, is used for live broadcast, and a mobile phone cooperates with the wireless headset, so that the TWS headset and a live broadcast application are tightly integrated, to eliminate a connection line, reduce a quantity of devices, and improve convenience.

The following describes this application from a plurality of aspects. Mutual reference may be made to implementations and beneficial effects of the following plurality of aspects.

According to a first aspect, this application provides an audio processing method, applied to an audio processing system. The audio processing system includes an electronic device, an accompaniment audio providing device, and a wireless headset.

According to an implementation of this application, the audio processing method includes:
the electronic device starts a live broadcast application, where the live broadcast application publishes audio, and receives feedback audio associated with the audio;
the electronic device receives an audio signal including an accompaniment audio signal sent by the accompaniment audio providing device, where the received audio signal is used as a first audio signal, or the received audio signal is processed and a processed signal is used as a first audio signal;
the electronic device publishes the first audio signal by using the live broadcast application, and receives feedback audio through the internet by using the live broadcast application, where the feedback audio is a second audio signal;
the electronic device mixes the first audio signal and the second audio signal to obtain a third audio signal; and
the electronic device sends, through wireless communication, the third audio signal to the wireless headset associated with the electronic device, to perform listening.

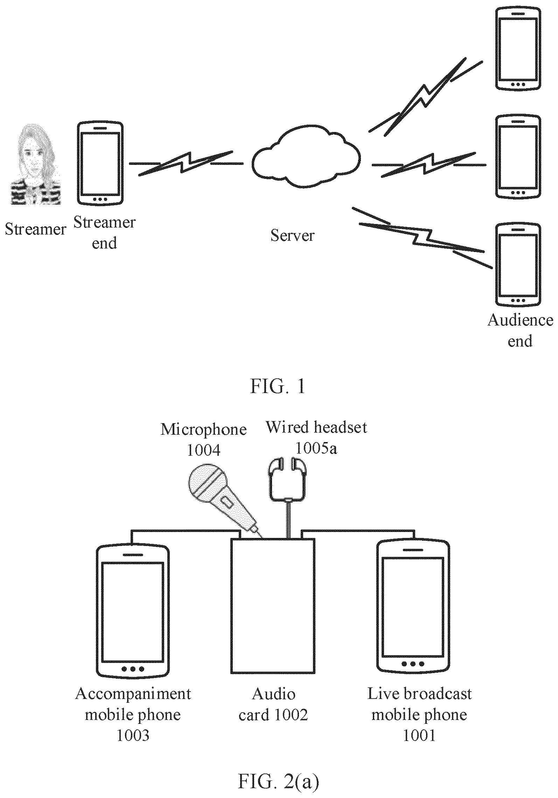

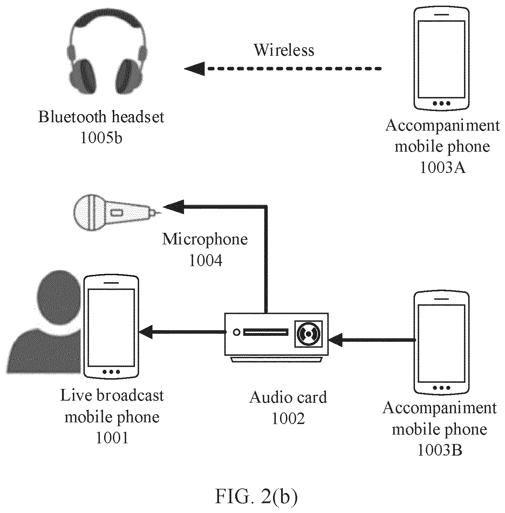

A live broadcast scenario is used as an example. The electronic device may be a terminal used by a streamer to perform live broadcast, for example, an electronic device such as a mobile phone or a tablet computer. The accompaniment audio providing device may be a device that can provide an audio output, for example, an accompaniment mobile phone or an audio player. The wireless headset is wirelessly connected to the electronic device, and is configured to listen to the third audio signal obtained by the electronic device by performing audio mixing based on the first audio signal and the second audio signal (that is, an audio signal formed by mixing accompaniment audio, streamer audio, and audience audio). A connection line is removed, a user action is not affected, and portability is improved. Therefore, the streamer can perform live broadcast with a small quantity of electronic devices, so that wired connections are reduced, portability is improved, and a live broadcast effect is good without a delay. This avoids problems such as a large quantity of devices and complex connection lines in FIG. 2(a) and a problem that there is a delay difference and it is difficult for a user to sense the delay difference in FIG. 2(b), which directly affects the live broadcast effect. The wireless headset may be, for example, a Bluetooth headset, and may be connected to a live broadcast mobile phone through a Bluetooth module to transmit an audio signal. Certainly, this is not limited. Any wireless headset that can transmit an audio signal between the headset and a mobile phone in a non-wired manner should be understood as falling within the scope of this application.

In a possible implementation of the first aspect, the audio processing system further includes an audio processor (providing audio processing such as audio mixing) and a sound collection apparatus (configured to collect streamer audio), the accompaniment audio providing device and the sound collection apparatus are connected to the sound collection apparatus, the sound collection apparatus is connected to the electronic device, and that the electronic device receives an audio signal including an accompaniment audio signal sent by the accompaniment audio providing device, where the received audio signal is used as a first audio signal, or the received audio signal is processed and a processed signal is used as a first audio signal includes: The audio processor separately receives, through wired communication, the accompaniment audio signal provided by the accompaniment audio providing device and a streamer audio signal collected by the sound collection apparatus, and mixes the accompaniment audio signal and the streamer audio signal to obtain the first audio signal; and the electronic device receives, through wired communication, the first audio signal provided by the audio processor.

In other words, in this implementation, the audio signal received by the electronic device is an audio signal obtained after the audio processor performs audio mixing, and is directly used as the first audio signal. Specifically, the accompaniment audio signal is transmitted by the accompaniment audio providing device to the audio processor, the streamer audio signal is collected by the sound collection apparatus and transmitted to the audio processor, the audio processor mixes the accompaniment audio signal and the streamer audio signal to obtain the first audio signal, and the electronic device is connected to the audio processor through wired communication, and receives the first audio signal from the audio processor. Therefore, it can be ensured that the audio signal from the audio processor is not interfered by the outside, and a signal loss is relatively small in a communication process, so that sound quality can be improved. In addition, when playing the first audio signal by using the live broadcast application, the electronic device receives, through the internet, an audio signal that reflects a feedback, so that the streamer can face more audiences, and listening and watching of the audiences can be convenient.

The audio processor, the sound collection apparatus, and the accompaniment audio providing device may be integrated into one electronic device, or these functions may be jointly implemented by a plurality of electronic devices. The sound collection apparatus may be a separate receiver or microphone, or may be an electronic device such as a mobile phone having a microphone component, and can provide the streamer audio signal. The accompaniment audio providing device may be an electronic device that can play audio, such as an accompaniment mobile phone or a record player, and can provide the accompaniment audio signal. Both the accompaniment audio providing device and the sound collection apparatus may be connected to the audio processor in a wired manner, and the audio processor performs audio mixing on the accompaniment audio signal and the streamer audio signal to obtain the first audio signal. Therefore, the first audio signal with relatively good quality can be conveniently obtained by using the audio processor, the sound collection apparatus, and the accompaniment audio providing device.

Optionally, the first audio signal is a digital audio signal. To be specific, first audio output by the audio processor may be a digital audio signal, and the audio processor may be connected to the electronic device in a digital input manner. For example, the audio processor is connected to a USB interface or a Type-C interface of the electronic device by using a USB connector or a Type-C connector.

Alternatively, the first audio signal may be an analog audio signal. In this case, the electronic device converts the first audio signal that is the analog signal into a first audio signal that is a digital signal, and publishes the first audio signal that is the digital signal. To be specific, first audio output by the audio processor may be an analog audio signal, and the audio processor is connected to the electronic device in an analog input manner. For example, the audio processor is connected to a headset jack of the electronic device by using a headset connector. To facilitate publishing of the first audio signal through a wireless network, the electronic device may convert the analog audio signal into the digital audio signal by using an underlying codec (codec), and then publish the digital audio signal through the wireless network. In other words, the electronic device can adapt to audio processors of different types of audio signals, and can transmit a digital audio signal in all cases. This improves accuracy and stability of audio transmission.

Further, the electronic device includes an audio mixing module and a channel control module. When the electronic device starts the live broadcast application, the channel control module enables the electronic device to enable both a wireless audio interface and a wired audio interface, and the channel control module enables the audio mixing module to perform audio mixing, and establishes a first channel, a second channel, a third channel, and a fourth channel. The first channel is used to send the first audio signal from the wired audio interface to the live broadcast application, to publish the first audio signal by using the application; the second channel is used to send the first audio signal from the wired audio interface to the audio mixing module; the third channel is used by the live broadcast application to send the second audio signal received through a wireless network to the audio mixing module; and the fourth channel is used to send, to the wireless audio interface through wireless communication, the third audio signal obtained by the audio mixing module by performing audio mixing based on the first audio signal and the second audio signal, so that the wireless headset performs listening.

In other words, the electronic device starts live broadcast by using the live broadcast application at an underlying application layer of a system, and performs audio mixing and channel control by using the audio mixing module and the channel control module at a framework layer, to implement audio mixing and transmission. Therefore, the channel control module and the audio mixing module are disposed at the underlying framework layer of the system of the electronic device, so that audio transmission can be accurately and stably performed on the basis of audio mixing, and listening can be implemented by using the wireless headset.

In addition, in another possible implementation of the first aspect, that the electronic device receives an audio signal including an accompaniment audio signal sent by the accompaniment audio providing device, where the received audio signal is used as a first audio signal, or the received audio signal is processed and a processed signal is used as a first audio signal includes:
the electronic device receives, through wired communication, the accompaniment audio signal sent by the accompaniment audio providing device;
the wireless headset collects a streamer audio signal, and sends the streamer audio signal to the electronic device through wireless communication; and
the electronic device performs audio mixing based on the accompaniment audio signal and the streamer audio signal, to obtain the first audio signal.

In other words, in this implementation, the electronic device performs audio mixing on the received audio signals, and uses a processed signal as the first audio signal.

A live broadcast scenario is used as an example. The electronic device may be a terminal used by a streamer to perform live broadcast, for example, an electronic device such as a mobile phone or a tablet computer. The accompaniment audio providing device may be an electronic device that can play audio, such as an accompaniment mobile phone or a record player, to provide the accompaniment audio signal. The electronic device and the accompaniment audio providing device are connected through wired communication. It can be ensured that the accompaniment audio signal from the accompaniment audio providing device is not interfered by the outside, and a signal loss is relatively small in a communication process, so that sound quality can be improved. When publishing the first audio signal by using the live broadcast application, the electronic device receives an audio signal that reflects a feedback, so that the streamer can face more audiences (the audiences may listen to and watch, through the internet, application played by the electronic device), and listening and watching of the audiences can be convenient. The wireless headset is wirelessly connected to the electronic device, and the wireless headset picks up streamer audio, provides the streamer audio for the electronic device, and receives the third audio signal obtained by the electronic device through audio mixing (that is, an audio signal formed by mixing accompaniment audio, streamer audio, and audience audio). In the wireless connection, a connection line is completely removed, a user action is not affected, and portability is improved. Because the wireless headset is worn on an ear and a position of the wireless headset is basically fixed, the wireless headset is very close to a human mouth, and a relative position of the wireless headset and the human mouth is basically fixed. This shows a unique advantage of collecting a human voice by using the wireless headset. Therefore, the streamer can perform live broadcast with fewer electronic devices. The streamer needs to carry only the electronic device, the accompaniment audio providing device, and the wireless headset for live broadcast, and only the accompaniment audio providing device and the electronic device are wiredly connected, so that a quantity of wired connections is small, portability is further improved, and a live broadcast effect is good without a delay. This avoids problems such as a large quantity of devices and complex connection lines in FIG. 2(a) and a problem that there is a delay difference and it is difficult for a user to sense the delay difference in FIG. 2(b), which directly affects the live broadcast effect.

Optionally, the accompaniment audio signal is a digital audio signal. First audio output by the accompaniment audio providing device may be a digital audio signal, and the accompaniment audio providing device may be connected to the electronic device in a digital input manner. For example, the accompaniment audio providing device is connected to a USB interface or a Type-C interface of the electronic device by using a USB connector or a Type-C connector.

Alternatively, the accompaniment audio signal may be an analog audio signal. In this case, the accompaniment audio signal that is the analog signal is converted by the electronic device into an accompaniment audio signal that is a digital signal. Then, the electronic device performs audio mixing based on the streamer audio signal and the accompaniment audio signal that is the digital signal. To be specific, first audio output by the accompaniment audio providing device may be an analog audio signal, and the accompaniment audio providing device may be connected to the electronic device in an analog input manner. For example, the accompaniment audio providing device is connected to a headset jack of the electronic device by using a headset connector. To facilitate publishing of an audio signal through a network, the electronic device may convert an analog audio signal into a digital audio signal by using an underlying codec (codec), and then publish the digital audio signal through the network. Therefore, the electronic device can adapt to different types of audio signals of the accompaniment audio providing device, and can publish a digital audio signal in all cases. This improves accuracy and stability of audio transmission.

Further, the electronic device includes an audio mixing module and a channel control module. When the electronic device starts the live broadcast application, the channel control module enables the electronic device to enable both a wireless audio interface and a wired audio interface, and the channel control module enables the audio mixing module to perform audio mixing, and establishes a channel a, a channel b, a channel c, a channel d, and a channel e. The channel a is used to send the accompaniment audio signal from the wired audio interface to the audio mixing module; the channel b is used to send the streamer audio signal from the wireless audio interface to the audio mixing module; the channel c is used to send, from the audio mixing module to the live broadcast application, the first audio signal obtained by the audio mixing module by performing audio mixing based on the accompaniment audio signal and the streamer audio signal, to publish the first audio signal through the internet; the channel d is used by the live broadcast application to send the second audio signal received through the internet to the audio mixing module; and the channel e is used to send, to the wireless audio interface, the third audio signal obtained by the audio mixing module by performing audio mixing based on the first audio signal and the second audio signal, to send the third audio signal through a wireless network to the wireless headset associated with the electronic device.

In other words, the electronic device starts live broadcast by using the application at an underlying application layer of a system, and performs audio mixing and channel control by using the audio mixing module and the channel control module at a framework layer, to implement audio mixing and transmission. Therefore, the channel control module and the audio mixing module are disposed at the underlying framework layer of the system of the electronic device, so that sound pickup can be performed by the wireless headset, audio mixing can be performed by the audio mixing module on streamer audio, accompaniment audio, and audience feedback sound (the second audio signal) obtained through sound pickup, and then mixed audio is transmitted to the streamer through wireless communication for the streamer to listen to.

In a possible implementation of the first aspect, the audio mixing is performed according to any audio mixing algorithm in a linear algorithm, a fixed weight algorithm, and a dynamic weight algorithm. In other words, audio mixing may be performed on audio according to an audio mixing algorithm such as the linear algorithm, the fixed weight algorithm, or the dynamic weight algorithm. Therefore, audio mixing can be easily implemented, and an audio mixing effect is good.

According to a second aspect, this application provides an audio processing method, applied to an electronic device at a live broadcast end. The method includes: starting a live broadcast application, where the live broadcast application publishes audio, and receives feedback audio associated with the published audio; receiving an audio signal including an accompaniment audio signal, where the received audio signal is used as a first audio signal to be published, or the received audio signal is processed and a processed signal is used as a first audio signal to be published; publishing the first audio signal by using the live broadcast application, and receiving feedback audio through the internet by using the live broadcast application, where the feedback audio is a second audio signal; mixing the first audio signal and the second audio signal to obtain a third audio signal; and transmitting the third audio signal through wireless communication, so that a wireless headset performs listening.

In other words, the electronic device serving as the live broadcast end performs audio mixing on an audio signal for publishing (that is, the first audio signal) and a feedback audio signal (that is, the second audio signal), and then transmits a mixed audio signal to the wireless headset through wireless communication, to implement listening on a live broadcast site. Therefore, a streamer can carry fewer electronic devices, connection lines are simpler and fewer, and live broadcast is convenient.

In a possible implementation of the second aspect, the receiving an audio signal including an accompaniment audio signal, where the received audio signal is used as a first audio signal, or the received audio signal is processed and a processed signal is used as a first audio signal includes: receiving the first audio signal through wired communication, where the first audio signal is obtained by mixing the accompaniment audio signal and a streamer audio signal.

In other words, according to the audio processing method in the foregoing implementation, the electronic device directly inputs, through wired communication, the first audio signal obtained by mixing the accompaniment audio signal and the streamer audio signal, publishes the first audio signal through the internet, receives the second audio signal associated with the first audio signal, performs audio mixing on the first audio signal and the second audio signal, and then sends a mixed audio signal through wireless communication, to implement listening by using the wireless headset.

Optionally, the first audio signal is a digital audio signal.

Optionally, the first audio signal is an analog audio signal, and the analog audio signal is converted by the electronic device into a digital audio signal for generating the published audio.

In a possible implementation of this application, the electronic device includes an audio mixing module and a channel control module. When the electronic device starts the live broadcast application, the channel control module enables the electronic device to enable both a wireless audio interface and a wired audio interface, and the channel control module enables the audio mixing module to perform audio mixing, and establishes a first channel, a second channel, a third channel, and a fourth channel. The first channel is used to send the first audio signal from the wired audio interface to the live broadcast application, to publish the first audio signal by using the application; the second channel is used to send the first audio signal from the wired audio interface to the audio mixing module; the third channel is used by the live broadcast application to send the second audio signal received through a wireless network to the audio mixing module; and the fourth channel is used to send, to the wireless audio interface through wireless communication, the third audio signal obtained by the audio mixing module by performing audio mixing based on the first audio signal and the second audio signal, so that the wireless headset performs listening.

In another possible implementation of the second aspect, the receiving an audio signal including an accompaniment audio signal, where the received audio signal is used as a first audio signal, or the received audio signal is processed and a processed signal is used as a first audio signal includes: receiving the accompaniment audio signal through wired communication; receiving a streamer audio signal through wireless communication; and performing audio mixing based on the accompaniment audio signal and the streamer audio signal, to obtain the first audio signal.

In other words, according to the audio processing method in the foregoing implementation, the electronic device inputs the accompaniment audio signal through wired communication. The wireless headset performs sound pickup and sends the picked-up streamer audio signal to the electronic device through wireless communication. The electronic device mixes the accompaniment audio signal and the streamer audio signal to form the first audio signal, publishes the first audio signal through the internet, receives the second audio signal associated with the first audio signal, performs audio mixing on the first audio signal and the second audio signal, and then sends a mixed audio signal through wireless communication, to implement listening by using the wireless headset. In other words, both a sound pickup function and a listening function are implemented by using the wireless headset. This can further reduce devices and connection lines, and improve convenience.

Optionally, the accompaniment audio signal is a digital audio signal.

Optionally, the accompaniment audio signal is an analog audio signal, the analog audio signal is converted by the electronic device into a digital audio signal, and the electronic device performs audio mixing based on the streamer audio signal and an accompaniment audio signal that is the digital audio signal.

In another possible implementation of this application, the electronic device includes an audio mixing module and a channel control module. When the electronic device starts the live broadcast application, the channel control module enables the electronic device to enable both a wireless audio interface and a wired audio interface, and the channel control module enables the audio mixing module to perform audio mixing, and establishes a channel a, a channel b, a channel c, a channel d, and a channel e. The channel a is used to send the accompaniment audio signal from the wired audio interface to the audio mixing module; the channel b is used to send the streamer audio signal from the wireless audio interface to the audio mixing module; the channel c is used to send, from the audio mixing module to the live broadcast application, the first audio signal obtained by the audio mixing module by performing audio mixing based on the accompaniment audio signal and the streamer audio signal, to publish the first audio signal through the internet; the channel d is used by the live broadcast application to send the second audio signal received through the internet to the audio mixing module; and the channel e is used to send, to the wireless audio interface, the third audio signal obtained by the audio mixing module by performing audio mixing based on the first audio signal and the second audio signal, to send the third audio signal through a wireless network to the wireless headset associated with the electronic device.

In a possible implementation of the second aspect, the audio mixing is performed according to any audio mixing algorithm in a linear algorithm, a fixed weight algorithm, and a dynamic weight algorithm.

According to a third aspect, this application provides a computer-readable storage medium, storing computer-readable code. When the computer-readable code is run by one or more processors, the processor is enabled to perform the audio processing method according to any implementation of the second aspect.

According to a fourth aspect, this application provides an electronic device, configured to publish audio by using a live broadcast application and receive feedback audio associated with the published audio, and including: a wireless audio interface and a wired audio interface; an audio signal collection module, configured to receive an audio signal including an accompaniment audio signal through the wireless audio interface and the wired audio interface; and a channel control module and an audio mixing module. The channel control module is configured to: when the electronic device starts the live broadcast application, enable the wireless audio interface and the wired audio interface, and send the audio signal collected by the audio signal collection module to the audio mixing module. The audio mixing module is configured to obtain, based on the audio signal received by the audio signal collection module, a first audio signal to be published by using the live broadcast application, and the audio mixing module is further configured to perform audio mixing based on the first audio signal and a second audio signal that is received by the live broadcast application as a feedback, to generate a third audio signal. The channel control module is further configured to send the third audio signal to the wireless audio interface, to transmit the third audio signal through wireless communication, so that a wireless headset associated with the electronic device performs listening.

In a possible implementation of the fourth aspect, when the electronic device starts the live broadcast application, the channel control module enables the electronic device to enable both the wireless audio interface and the wired audio interface. The channel control module enables the audio mixing module to perform audio mixing, and establishes a first channel, a second channel, a third channel, and a fourth channel. The first channel is used to send the first audio signal from the wired audio interface to the live broadcast application, to play the first audio signal by using the live broadcast application; the second channel is used to send the first audio signal from the wired audio interface to the audio mixing module; the third channel is used by the live broadcast application to send the second audio signal received through the internet to the audio mixing module; the audio mixing module performs audio mixing on the first audio signal and the second audio signal to obtain the third audio signal; and the fourth channel is used to send the third audio signal from the audio mixing module to the wireless audio interface.

In another possible implementation of the fourth aspect, when an application layer starts the live broadcast application, the channel control module enables the electronic device to enable both the wireless audio interface and the wired audio interface, and the channel control module enables the audio mixing module to perform audio mixing, and establishes a channel a, a channel b, a channel c, a channel d, and a channel e.

The channel a is used to send the accompaniment audio signal from the wired audio interface to the audio mixing module.

The channel b is used to send a streamer audio signal from the wireless audio interface to the audio mixing module.

The channel c is used to send, from the audio mixing module to the live broadcast application, the first audio signal obtained by the audio mixing module by performing audio mixing based on the accompaniment audio signal and the streamer audio signal, to publish the first audio signal through the internet.

The channel d is used by the live broadcast application to send the second audio signal received through a wireless network to the audio mixing module.

The channel e is used to send, to the wireless audio interface, the third audio signal obtained by the audio mixing module by performing audio mixing based on the first audio signal and the second audio signal, to send the third audio signal to the wireless headset through the wireless network.

### BRIEF DESCRIPTION OF DRAWINGS

FIG. 1 is a diagram of an application scenario of an audio processing method according to an embodiment of this application;
FIG. 2(a) is a schematic diagram of a live audio processing system in a conventional technology;
FIG. 2(b) is a schematic diagram of a live audio processing system in another conventional technology;
FIG. 3 is a diagram of an architecture of a live audio processing system;
FIG. 4 is a schematic diagram of a structure of an electronic device according to an embodiment of this application;
FIG. 5 is a block diagram of a software structure of an electronic device according to an embodiment of this application;
FIG. 6 is a schematic diagram of an audio processing system according to an embodiment of this application;
FIG. 7 is a schematic diagram of an implementation in which a live broadcast mobile phone simultaneously enables a plurality of headsets (audio interfaces) according to some embodiments of this application;
FIG. 8(a) is a schematic flowchart of an audio processing method using the audio processing system in FIG. 6;
FIG. 8(b) is another schematic flowchart of an audio processing method using the audio processing system in FIG. 6;
FIG. 9 is a diagram of an architecture on a streamer side in the audio processing system according to FIG. 6;
FIG. 10 is a diagram of a system architecture of a live broadcast mobile phone in the audio processing system according to FIG. 6;
FIG. 11 is a schematic diagram of an audio processing system according to another embodiment of this application;
FIG. 12(a) is a schematic flowchart of an audio processing method using the audio processing system in FIG. 11;
FIG. 12(b) is another schematic flowchart of an audio processing method using the audio processing system in FIG. 11;
FIG. 13 is a diagram of an architecture on a streamer side in FIG. 11; and
FIG. 14 is a diagram of a system architecture of a live broadcast mobile phone in FIG. 13.

### DESCRIPTION OF EMBODIMENTS

The following clearly and completely describes the technical solutions in embodiments of this application with reference to the accompanying drawings in embodiments of this application.

The following further describes embodiments of this application in detail with reference to the accompanying drawings.

FIG. 1 shows an example application scenario of an audio processing method and system according to this application. FIG. 1 shows that a streamer (that is, a performer) performs a live broadcast activity on the internet via a streamer-end device (an electronic device such as a mobile phone or a tablet computer) by using a specific live broadcast application, for example, Kwai TM or TikTok TM. In a live broadcast process, in addition to a video image on a live broadcast side, audio of the streamer is also published, for example, a sung song, a recitation, or a product introduction. As a receiver of the live broadcast activity, an audience watches the live broadcast via an audience-end device (an electronic device such as a mobile phone or a tablet computer) by using the live broadcast application. In addition, for the live broadcast activity, the audience may perform corresponding feedback by using the audience-side device. In addition to performing operations such as commenting, purchasing, and giving likes through the live broadcast application, the audience may also interact with the streamer by using a sound. To be specific, the audience-side device may receive audio sent by the live-broadcast-side device, and may send feedback audio in response to the audio to the live-broadcast-side device, so that the streamer can better interact with the audience.

A live broadcast activity of a singing type is used as an example. Based on a platform provided by a live broadcast application, a streamer publishes a video and audio of singing a song by using a mobile phone of the streamer. When an audience watches this program by using a mobile phone or a tablet computer, in addition to common commenting, giving likes, and the like by using the application, the audience may further perform voice interaction with the streamer by using a device such as a mobile phone, for example, perform commenting or sing together.

In a solution for implementing the foregoing live broadcast activity in the conventional technology, as shown in FIG. 2(a), devices on a live broadcast side include a live broadcast mobile phone 1001, an audio card 1002, an accompaniment mobile phone 1003, a microphone 1004, a wired headset 1005a, and the like for live broadcast. A live broadcast application runs on the live broadcast mobile phone 1001, and interaction with an audience is performed by using the live broadcast mobile phone 1001. The audio card 1002 includes a plurality of input interfaces and output interfaces. The live broadcast mobile phone 1001 is connected to one of the output interfaces of the audio card 1002 in a wired manner, and the audio card 1002 outputs audio to the live broadcast mobile phone 1001. The accompaniment mobile phone 1003, the microphone 1004, and the wired headset 1005a are connected to the audio card 1002 in a wired manner, to separately output, to the audio card 1002 for audio mixing, accompaniment audio and streamer audio that is collected by using the microphone 1004. Mixed audio is transmitted to the audience through the live broadcast mobile phone 1001, and is provided for a streamer for listening through the wired headset 1005a.

In the foregoing solution, both a human voice (for example, a singing voice of the streamer) and an accompaniment (accompaniment music for singing a song) can be obtained, and an audience voice (that is, an interactive voice of the audience) can be obtained, so that a sound collection function, an audio mixing function, and a listening function are implemented. However, an excessively large quantity of devices, complex operations, and disordered connection lines are caused, and affect an activity of the streamer. In addition, to ensure a good sound effect of live broadcast, the streamer usually needs to purchase devices such as the professional microphone 1004, the audio card 1002, the wired headset 1005a, and the accompaniment mobile phone 1003, resulting in a large volume. The foregoing solution is basically not applicable to an outdoor occasion, especially a case in which a live broadcast location frequently changes.

In addition, currently, a live broadcast solution using a Bluetooth headset 1005b is further proposed. As shown in FIG. 2(b), in this method, three mobile phones are used, one mobile phone is used as a live broadcast mobile phone 1001, and the other two mobile phones are used as accompaniment mobile phones 1003 that provide accompaniment audio. One accompaniment mobile phone 1003A is connected to the Bluetooth headset 1005b, and is configured to provide accompaniment audio for a streamer in a Bluetooth communication manner. The other accompaniment mobile phone 1003B is connected to an audio card 1002, to perform, by using the audio card 1002, audio mixing on the accompaniment audio and streamer audio that is collected by a microphone 1004.

However, when this solution is used, the two accompaniment mobile phones 1003A and 1003B need to start a same music app to enter a same play interface, and a user needs to simultaneously tap play buttons with two hands. Although connection lines are reduced by using the Bluetooth headset 1005b in this solution, a use scenario of this solution is limited, and this solution is usually applicable to only a singing case. A tougher problem is that it is difficult for the user to simultaneously tap the play buttons of the two accompaniment mobile phones 1003A and 1003B with two hands, and a delay difference inevitably exists. In addition, it is difficult for the user to sense the delay difference. This directly affects a live broadcast effect. In this solution, although connection lines are reduced by using the Bluetooth headset, because the Bluetooth headset can only be used to listen to accompaniment audio, but cannot be used to listen to a feedback of the audience or a voice of the streamer, a use scenario of this solution is limited, and this solution is usually applicable to only a singing case.

In view of this,
the following first briefly describes a principle, process, and system architecture of a complete live broadcast application.

The principle of live broadcast is that audio and a video recorded by a streamer are pushed to a server and then distributed by the server to the audience for watching. During watching, the audience may participate and interact with the streamer.

The process of live broadcast mainly includes audio and video collection, data processing, audio and video encoding, stream pushing, data distribution, stream pulling, audio and video decoding, audio and video playing, and interaction.

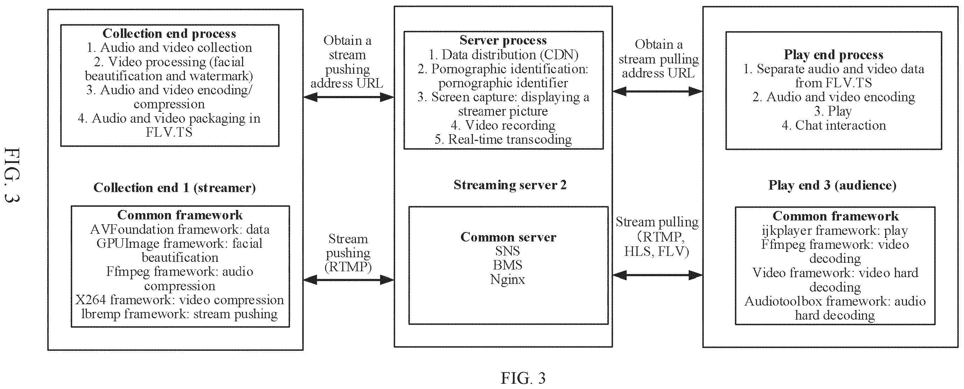

As shown in FIG. 3, the system architecture mainly includes a collection end 1 (that is, a streamer end), a streaming server 2, and a play end 3 (that is, an audience end). The collection end 1 implements audio and video collection, data processing, audio and video encoding, audio and video packaging, and stream pushing. The streaming server 2 implements data distribution, transcoding, pornographic identification, screen capture, and the like. The play end 3 mainly implements stream pulling, audio and video decoding, and audio and video playing.

In addition, a main reason for popularity of live broadcast is that the audience can participate and interact with streamers. In an interaction scenario, in addition to playing audio and a video, the play end 3 further collects a feedback (which may include audio and a video) of the audience, encodes and packages the feedback, and pushes the feedback to the streaming server 2. The streaming server 2 implements data distribution, and further sends the feedback to the play end 1, so that the streamer can listen, to implement interaction. For better interaction, the streamer usually needs to listen to live audio content and feedback audio content of the audience by using a headset.

This application is an audio processing solution proposed for the collection end 1, to make it more convenient for the streamer to listen.

In the audio processing solution of this application, both a wireless audio interface and a wired audio interface of the live broadcast mobile phone 1001 are enabled, and a wireless headset is used to receive audio sent by the wireless audio interface, to implement listening.

According to a specific solution of this application, after accompaniment audio and streamer audio are mixed in a wired manner, mixed audio is input into a live broadcast mobile phone, and published through the internet by using the live broadcast mobile phone, that is, provided for an audience-side mobile phone. The audience-side mobile phone sends feedback audio for the published audio to a server through the internet, to transmit the feedback audio to an application on the live broadcast mobile phone. The live broadcast mobile phone mixes the accompaniment audio, the streamer audio, and an audience feedback sound, and sends mixed audio to a wireless headset through wireless communication, to provide a listening function for the wireless headset that wirelessly communicates with the live broadcast mobile phone. In other words, the listening function is implemented by using the wireless headset.

According to another specific solution of this application, accompaniment audio is input into a live broadcast mobile phone in a wired manner. In addition, a wireless headset that wirelessly communicates with the live broadcast mobile phone picks up streamer audio. The live broadcast mobile phone mixes the accompaniment audio with a human voice and publishes mixed audio through the internet, so that an audience-side mobile phone can listen and perform feedback. The live broadcast mobile phone mixes the accompaniment audio, the human voice, and an audience feedback sound and sends mixed audio to the wireless headset to implement a listening function of the wireless headset. In other words, both a sound pickup function and the listening function are implemented by using the wireless headset.

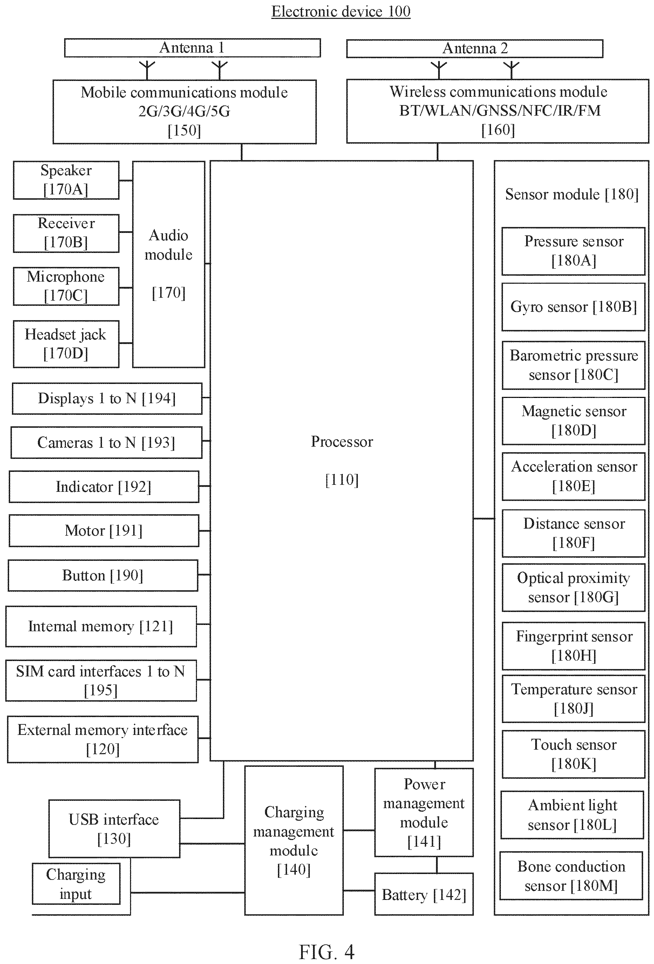

FIG. 4 is a schematic diagram of a structure of an electronic device 100 according to some embodiments of this application. For example, the electronic device is a terminal device at the collection end 1, such as the live broadcast mobile phone in the foregoing application scenario of this application.

The electronic device 100 may include a processor 110, an external memory interface 120, an internal memory 121, a universal serial bus (universal serial bus, USB) connector 130, a charging management module 140, a power management module 141, a battery 142, an antenna 1, an antenna 2, a mobile communications module 150, a wireless communications module 160, an audio module 170, a speaker 170A, a receiver 170B, a microphone 1004170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The processor 110 may generate an operation control signal based on instruction operation code and a time sequence signal, to complete control of instruction fetching and instruction execution.

A memory may further be disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved. For example, a live broadcast mobile phone according to a solution of the present invention is used as an example. After starting an application, the live broadcast mobile phone runs instructions to establish a plurality of audio channels, perform corresponding audio mixing, and send each audio signal to each corresponding apparatus. Specifically, the live broadcast mobile phone receives an audio signal for publishing that is sent by an audio processor (the audio signal for publishing is obtained by mixing an accompaniment audio signal and a streamer audio signal), sends the audio signal for publishing to a mobile phone of an audience through the internet, receives a feedback audio signal from the audience, performs audio mixing on the audio signal for publishing and the feedback audio signal to generate an audio signal for listening, and sends the audio signal for listening to a Bluetooth headset through Bluetooth communication.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, or a subscriber identity module (subscriber identity module, SIM) interface.

The I2C interface is a two-way synchronous serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K by using an I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset 1005b. According to an audio processing method in this application, an audio signal for publishing (a signal formed by mixing accompaniment audio and streamer audio) that is obtained through processing by the audio module 170 is transmitted to a remote audience to implement sharing, and an audio signal for listening (that is, an audio signal obtained by mixing the accompaniment audio, audience audio, and the streamer audio) is transmitted to the Bluetooth headset 1005b to implement listening.

The PCM interface may be configured to perform audio communication, and sample, quantize, and code analog signals. In some embodiments, the audio module 170 may be coupled to the wireless communications module 160 by using a PCM bus interface. In some embodiments, the audio module 170 may also transmit an audio signal to the wireless communications module 160 through the PCM interface, to implement a function of answering a call by using a Bluetooth headset 1005b. Both the I2S interface and the PCM interface may be used for audio communication.

The UART interface is a universal serial data bus, and is used for asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 by using the UART interface, to implement a Bluetooth function. In some embodiments, the audio module 170 may transmit an audio signal to the wireless communications module 160 through the UART interface, to implement a function of playing music by using a Bluetooth headset 1005b.

As a computer-readable storage medium, the internal memory 121 may include one or more tangible and non-transitory computer-readable media configured to store data and/or instructions. For example, the internal memory 121 may include any suitable non-volatile memory such as a flash memory and/or any suitable non-volatile storage device, for example, one or more hard disk drives (Hard-Disk Drive, HDD (s)), one or more compact disc (Compact Disc, CD) drives, and/or one or more digital versatile disc (Digital Versatile Disc, DVD) drives. According to some embodiments of this application, the memory 121 used as a computer-readable storage medium stores instructions. When the instructions are executed on a computer, the processor 110 is enabled to perform the audio processing method according to embodiments of this application. For details, refer to the method in the foregoing embodiments. Details are not described herein again.

It may be understood that the interface connection relationship between the modules shown in this embodiment of the present invention is merely an example, and does not constitute a limitation on the structure of the electronic device 100. In some other embodiments of this application, the electronic device 100 may alternatively use an interface connection manner different from that in the foregoing embodiment, or a combination of a plurality of interface connection manners.

The digital signal processor is configured to process a digital signal. In addition to processing a digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

A software system of the electronic device 100 may use a layered architecture, an event-driven architecture, a microkernel architecture, a micro-service architecture, or a cloud architecture. In this embodiment of the present invention, an Android system of a layered architecture is used as an example to illustrate the software structure of the electronic device 100.

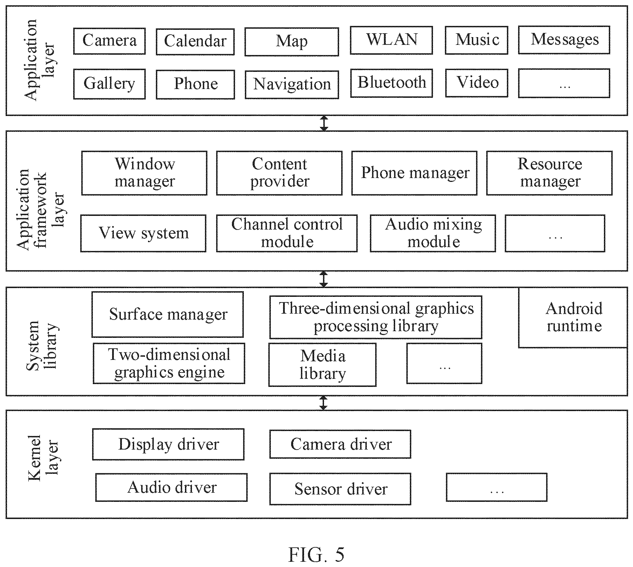

FIG. 5 is a block diagram of a software structure of an electronic device 100 according to an embodiment of the present invention.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages. For example, a live broadcast app that starts the audio processing method in this application is located at the application layer.

As shown in FIG. 5, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for applications at the application layer. The application framework layer includes some predefined functions.

As shown in FIG. 5, an application framework layer of a mobile phone (an example of the electronic device) for live broadcast in an audio processing system according to this application may include a window manager, a content provider, a view system, a phone manager, a resource manager, a channel control module, an audio mixing module, and the like.

The channel control module is configured to perform audio channel configuration and establish an audio channel, to transmit an audio signal. The audio mixing module is configured to perform audio mixing on audio signals.

Each audio channel is essentially used for data transfer between buffers (buffer). In other words, a start of an audio channel is a data buffer, and an end of the audio channel is another buffer. Under control of the channel control module, data is transferred from the start buffer to the end buffer. Logically, there is a channel.

The channel control module is a software module implemented by running specific code by a CPU. The channel control module reads data in an input buffer, processes the data, and stores processed data in an output buffer, to implement data processing. The foregoing code exists in a form of a "library", and a plurality of functions used to implement a channel control function are packaged in the library. By calling these functions, input and output buffers can be established, and data transfer and replication can be started, including a function of canceling a buffer and releasing a "channel". For example, data can be read, processed, and output by calling an interface function of the "library", that is, an audio channel can be established.

The audio mixing module is also a software module implemented by running specific code by the CPU. The essence of the audio mixing module is to sum up input signals. The audio mixing module may perform audio mixing according to any audio mixing algorithm in a linear algorithm, a fixed weight algorithm (varying with a signal amplitude), and a dynamic weight algorithm (a sum weight varies with a parameter).

The Android runtime includes a kernel library and a virtual machine. The Android runtime is responsible for scheduling and management of the Android system.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The kernel layer is a layer between hardware and software. The kernel layer includes at least a display driver, a camera driver, an audio driver, and a sensor driver.

The following uses a Bluetooth headset as an example of a wireless headset. The Bluetooth headset transfers an audio signal to a live broadcast mobile phone through Bluetooth communication. The foregoing two solutions in this application are described in more detail.

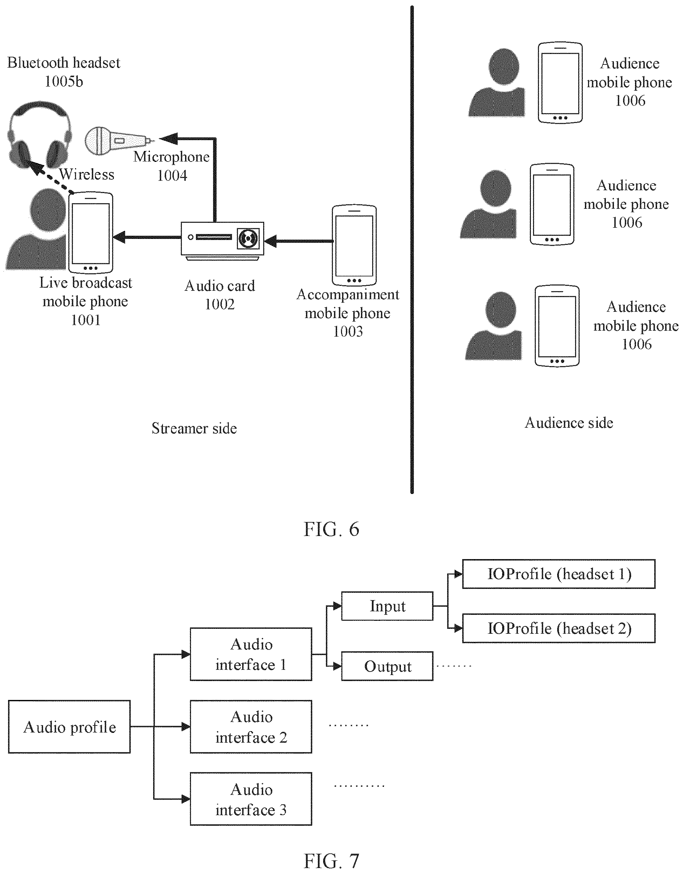

An audio processing method and an audio processing system for implementing the audio processing method according to an embodiment of this application are first described with reference to FIG. 6 to FIG. 10.

As shown in FIG. 6, the audio processing system for implementing the audio processing method in this embodiment includes a live broadcast mobile phone 1001, an accompaniment mobile phone 1003, an audio card 1002, a microphone 1004, and a Bluetooth headset 1005b. To facilitate subsequent understanding of a working procedure of the audio processing system, FIG. 6 further shows an audience mobile phone 1006 configured to play audio published by the live broadcast mobile phone 1001.

In this embodiment, the live broadcast mobile phone 1005 is an example of an electronic device, the audio card 1002 is an example of an audio processor, the accompaniment mobile phone 1003 is an example of an accompaniment audio providing device, the microphone 1004 is an example of a sound collection apparatus, and the audio card 1002 is an example of an audio processor.

The audio card 1002 is an external audio card, and is configured to perform corresponding processing on audio signals from the microphone 1004 and the accompaniment mobile phone 1003, and then transmit a processed audio signal to the live broadcast mobile phone 1001. To be specific, the audio card 1002 lias a plurality of audio input interfaces, to separately input audio signals from devices such as the microphone 1004 and the accompaniment mobile phone 1003, and perform corresponding processing by using the audio card 1002. In addition, the audio card 1002 further has an audio output interface, to output the processed audio signal to the live broadcast mobile phone 1001 through the audio output interface.

For example, the audio card 1002 may perform sound beautification processing, for example, electric sound processing, audio mixing processing, and sound change processing. In addition, the live broadcast audio card 1002 may further use a built-in interesting sound effect such as applause, kissing, despise, or laughter, so that live broadcast is not monotonous. In addition, the audio card 1002 may further have a noise reduction function, so that volume of background music suddenly decreases when a streamer speaks, and the volume of the background music is restored after the streamer finishes speaking.

Currently, common audio cards in the market include, for example, an ICKBTM SO8 audio card, an XOX TMFX5 audio card, a TAKSTAR TMMX1 live broadcast audio card, a Seeknature TM audio card, and a Changba TMK10 audio card.

The accompaniment mobile phone 1003 and the microphone 1004 each are wiredly connected to an audio input interface of the audio card 1002. In a live singing scenario, the accompaniment mobile phone 1003 is configured to input accompaniment audio of a sung song to the audio card 1002, and the microphone 1004 is configured to collect a singing sound of the streamer and input the sound to the audio card 1002. The audio card 1002 mixes the accompaniment audio and singing audio, performs corresponding processing, and outputs mixed audio to the live broadcast mobile phone 1001 in a wired communication manner through the audio output interface.

The live broadcast mobile phone 1001 is connected to the audio card 1002 in a wired manner. The live broadcast mobile phone 1001 publishes, by using a live broadcast application running on the live broadcast mobile phone 1001, the mixed audio that is of the accompaniment audio and the singing audio of the streamer and that is sent by the audio card 1002, and pushes the mixed audio to a streaming server. The audience mobile phone 1006 can play the mixed audio by pulling a stream from the streaming server. In addition, the live broadcast mobile phone 1001 further receives feedback audio from an audience side through the internet by using the live broadcast application, mixes the feedback audio with the accompaniment audio and a human voice, and sends mixed audio to the Bluetooth headset 1005b in a Bluetooth communication manner. By using the Bluetooth headset 1005b, the streamer may listen to the accompaniment audio, the singing sound of the streamer, and the feedback audio from the audience mobile phone 1006.

An audio signal for publishing that is formed by performing audio mixing on a streamer audio signal collected by the microphone 1004 and an accompaniment audio signal provided by the accompaniment mobile phone 1003 is used as an example of a first audio signal. The audio signal for publishing means that the audio signal is live-published by using the live broadcast application.

A feedback audio signal reflecting the feedback audio on the audience side is used as an example of a second audio signal. An audio signal for listening that is obtained after the live broadcast mobile phone 1001 mixes the received feedback audio signal with the accompaniment audio and the human voice is used as an example of a third audio signal. The audio signal for listening means that the audio signal is transmitted to the streamer, to listen to live content.

The live broadcast mobile phone 1001 is configured to start an application to publish audio to the audience mobile phone 1006 by using the application, and receive a feedback from the audience mobile phone 1006.

Both the accompaniment mobile phone 1003 and the microphone 1004 are wiredly connected to the audio card 1002, and the audio card 1002 is wiredly connected to the live broadcast mobile phone 1001. The audio card 1002 is configured to perform audio mixing on the singing sound of the streamer that is collected by the microphone 1004 and the accompaniment audio provided by the accompaniment mobile phone 1003, to form the audio signal for publishing, and send the audio signal for publishing to the live broadcast mobile phone 1001 by using a wired connection.

The audience mobile phone 1006 is connected to the live broadcast mobile phone 1001 through the internet, to receive the audio signal for publishing that is published by the live broadcast mobile phone 1001, and send the audio signal reflecting the feedback to the live broadcast mobile phone 1001.

The Bluetooth headset 1005b is communicatively connected to the live broadcast mobile phone 1001 through Bluetooth. The live broadcast mobile phone 1001 is further configured to perform audio mixing on the audio signal for publishing and the feedback audio signal to generate the audio signal for listening, and send the audio signal for listening to the Bluetooth headset 1005b, so that the streamer performs listening.

In the audio processing system according to this application, the live broadcast mobile phone 1001 is wiredly connected to the audio card 1002 (that is, wiredly connected to the audio output interface of the audio card 1002) to input the audio signal for publishing, and the live broadcast mobile phone 1001 is communicatively connected to the Bluetooth headset 1005b through Bluetooth to output the audio signal for listening. That is, the live broadcast mobile phone 1001 enables functions of both an analog headset and the Bluetooth headset 1005b. Based on this, a plurality of audio channels are established between the live broadcast mobile phone 1001, the audio card 1002, the Bluetooth headset 1005b, and the audience mobile phone 1006, audio mixing is performed on the audio signal for publishing from the audio card 1002 and the feedback audio signal from the audience mobile phone 1006 to generate the audio signal for listening, and the audio signal for listening is provided for the Bluetooth headset 1005b through Bluetooth communication, to implement a listening function of the Bluetooth headset.

Referring to FIG. 7, the following describes an implementation in which the live broadcast mobile phone 1001 simultaneously enables two audio interfaces (the analog headset and the Bluetooth headset 1005b).

One mobile phone is allowed to simultaneously enable the analog headset and the Bluetooth headset 1005b. This may be implemented by using software.

Specifically, using an Android system as an example, an audiopolicy (audio control) configuration in an Android framework (programming framework) may be modified, to specify that an input/output device includes IOProfile (user profile input/output) of two headsets. Specifically, as shown in FIG. 6, in an audio profile (audio_policy.conf), a plurality of audio (audio) interfaces are defined, each audio interface includes several outputs (output) and inputs (input), each output and input support a plurality of types of IOprofile, and each type of IOProfile supports several types of devices. Therefore, the two headsets are used as two devices and may be configured in the corresponding IOprofile. In other words, a plurality of audio interfaces can be enabled at the same time by modifying the profile. Based on this, the audio processing method in this application is implemented.

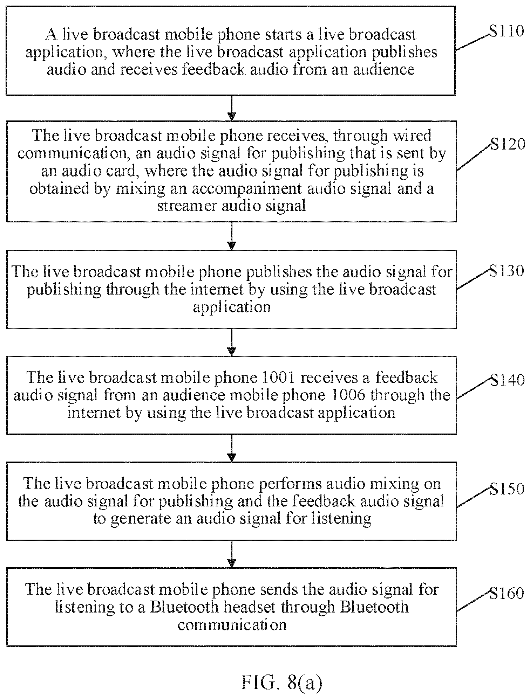

As shown in FIG. 8(a), the audio processing method applied to the audio processing system in the foregoing embodiment includes the following steps.

Step S110: The live broadcast mobile phone 1001 first starts a live broadcast application. By using the live broadcast application, the live broadcast mobile phone 1001 can publish, through a streaming server, audio to the audience mobile phone 1006 that watches the live broadcast application. In addition, the live broadcast mobile phone 1001 may further receive feedback audio that is from an audience and that is obtained by using the streaming server.

The live broadcast application may be software used for live broadcast, for example, TikTok TM or Kwai TM. A streamer opens the live broadcast application by using the live broadcast mobile phone 1001, and sends audio to the audience mobile phone 1006 through the streaming server via the internet by using the live broadcast application. The audience opens the same application by using the audience mobile phone 1006 to listen to the audio from the streamer, and sends feedback audio, that is, an audience audio signal, to the live broadcast mobile phone 1001 through the streaming server via the internet by using the audience mobile phone 1006. The streamer receives the feedback audio from the audience by using the live broadcast mobile phone 1001, for example, a comment of a user or a song sung by a user together with the streamer. According to some embodiments, in the audio processing system in this application, when the live broadcast mobile phone 1001 starts the live broadcast application, the live broadcast mobile phone 1001 enables a listening function of the Bluetooth headset 1005b. Then, steps S120 to S160 in the audio processing method shown in FIG. 8(a) are performed.

Step S120: After the listening function of the Bluetooth headset 1005b is enabled, the live broadcast mobile phone 1001 receives, through wired communication, an audio signal for publishing that is sent by the audio card 1002, where the audio signal for publishing is obtained by mixing an accompaniment audio signal and a streamer audio signal. More specifically, referring to the foregoing description of FIG. 6, the audio card 1002 is connected to the accompaniment mobile phone 1003 and the microphone 1004 through wired audio input interfaces, and is connected to the live broadcast mobile phone 1001 through a wired audio output interface. The accompaniment mobile phone 1003 transmits the accompaniment audio signal to the audio card 1002 through wired communication, the microphone 1004 transmits the streamer audio signal to the audio card 1002 through wired communication, and the audio card 1002 performs audio mixing on the accompaniment audio signal and the streamer audio signal, to obtain the audio signal for publishing. The audio card 1002 sends the audio signal for publishing to the live broadcast mobile phone 1001 through wired communication.

Step S130: The live broadcast mobile phone 1001 publishes the audio signal for publishing by using the application through the internet. Specifically, the live broadcast application sends, through the internet, the audio signal for publishing that is obtained by mixing the accompaniment audio signal and the streamer audio signal to a server associated with the application, so that the audience mobile phone 1006 pulls a stream from the server associated with the application and plays the published audio signal.

Step S140: The live broadcast mobile phone 1001 receives audience audio from the audience mobile phone 1006 through the internet by using the live broadcast application. To be specific, the audience mobile phone 1006 receives the audio signal for publishing, and sends a feedback audio signal of the audio signal for publishing, that is, the audience audio (that is, a second audio signal), to the live broadcast mobile phone 1001 through the internet.

Step S150: The live broadcast mobile phone 1001 performs audio mixing on the audio signal for publishing and the feedback audio signal to generate an audio signal for listening. As described above, an audio mixing method is performed by an audio mixing module at an application framework layer of the live broadcast mobile phone 1001. Details are not described herein again.

Step S160: The live broadcast mobile phone 1001 sends the audio signal for listening to the Bluetooth headset 1005b through a Bluetooth communication network.

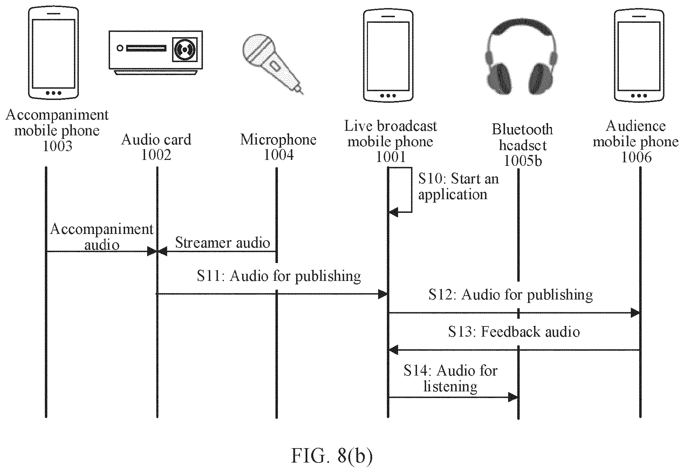

In the foregoing steps, an example procedure of signal processing between devices can be more intuitively understood by using FIG. 8(b).

Step 10: The live broadcast mobile phone 1001 starts a live broadcast application. When the live broadcast application is started, the live broadcast mobile phone 1001 modifies a default audio channel configuration of an operating system, to allow to enable a wired headset (an analog headset) and the Bluetooth headset 1005b at the same time. In addition, whether the analog headset is inserted is determined by detecting a wired audio interface, and whether the Bluetooth headset 1005b is successfully paired is determined by detecting whether Bluetooth is paired. When determining that the analog headset is inserted and the Bluetooth headset 1005b is successfully paired, the live broadcast mobile phone 1001 enters a listening mode.

Step S11: The live broadcast mobile phone 1001 obtains, through the audio card 1002, audio for the audience that is formed by mixing accompaniment audio and streamer audio. Step S12: The live broadcast mobile phone 1001 transmits the audio for the audience to the audience mobile phone 1006 by using the application. Step S13: The live broadcast mobile phone 1001 receives feedback audio from the audience mobile phone 1006. Step S14: The live broadcast mobile phone 1001 sends, to the Bluetooth headset 1005b through Bluetooth communication, audio for listening that is formed by mixing the audio for the audience and the feedback audio.

To be specific, the audio card 1002 is wiredly connected to an analog headset interface of the live broadcast mobile phone 1001 through an audio output interface of the audio card 1002. It can be ensured that an audio signal from the audio card 1002 is not interfered by the outside, and a signal loss is relatively small in a communication process, so that sound quality can be improved. The live broadcast mobile phone 1001 and the audience mobile phone 1006 are connected through the internet. For example, the live broadcast mobile phone 1001 and the audience mobile phone 1006 may be specifically connected through a network server, so that the streamer can face more audience, and listening and watching of the audience can be convenient. The Bluetooth headset 1005b is communicatively connected to the live broadcast mobile phone 1001 through Bluetooth. A connection line is completely removed, a user action is not affected, and portability is improved. An input of the live broadcast mobile phone 1001 is the audio signal for publishing (formed by mixing the accompaniment audio signal and the streamer audio) from the audio card 1002 and the feedback audio signal (an audience audio signal reflecting a feedback) from the audience mobile phone 1006. An output of the audio card 1002 is the audio signal for publishing. An input of the audience mobile phone 1006 is the audio signal for publishing, and an output is the feedback audio signal. The Bluetooth headset 1005b is used for listening, and an input is the audio signal for listening (formed by mixing the audio signal for publishing and the feedback audio signal). Therefore, the streamer can perform live broadcast with a small quantity of electronic devices, so that wired connections are reduced, portability is improved, and a live broadcast effect is good without a delay. This avoids problems such as a large quantity of devices and complex connection lines in FIG. 2(a) and a problem that there is a delay difference and it is difficult for a user to sense the delay difference in FIG. 2(b), which directly affects the live broadcast effect.

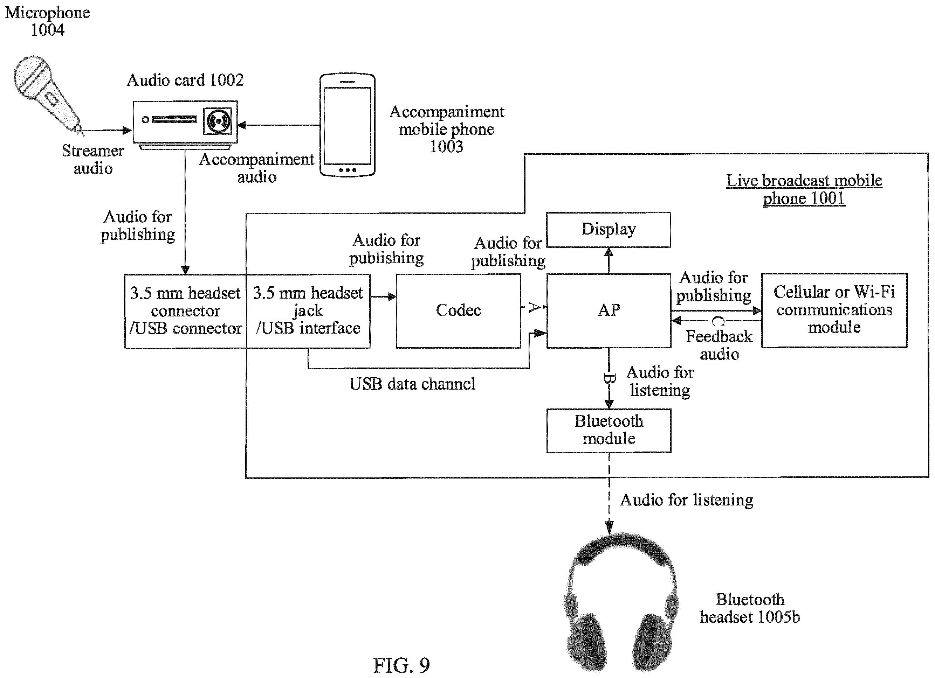

With reference to FIG. 9, the following describes signal transfer between electronic devices in the foregoing audio processing method.

A system shown in FIG. 9 for implementing the audio processing method according to this application includes the electronic devices shown in FIG. 5. Further, FIG. 9 shows hardware modules that are included in the live broadcast mobile phone 1001 and that are related to running of the solution in the embodiments, for example, an application processor (AP), a communications module (cellular or Wi-Fi communications module), a Bluetooth module, a codec (Codec), and a display module. The AP is configured to process a program, that is, the program is run in the AP, to implement a corresponding function, for example, audio mixing or internal communication of a device. The communications module is configured to perform communication between different devices to implement audio signal transmission.

After a live broadcast application is started (that is, step S 110), the accompaniment mobile phone 1003 plays music or a background sound as an accompaniment to provide accompaniment audio, the microphone 1004 collects a human voice of a streamer to provide streamer audio, and the microphone 1004 and the accompaniment mobile phone 1003 output audio signals to the audio card 1002, to mix the audio signals into an audio signal for publishing. The audio card 1002 sends the audio signal for publishing to the live broadcast mobile phone 1001. The audio signal for publishing may be sent to the live broadcast mobile phone 1001 in an analog signal manner, or may be sent to the live broadcast mobile phone 1001 in a digital signal manner. When the audio signal for publishing is sent in the analog signal manner, the live broadcast mobile phone 1001 converts the audio signal for publishing into a digital audio signal (corresponding to a signal A in FIG. 9) by using the codec, and then sends the audio signal for publishing to the audience by using the application processor AP and the communications module. The audience mobile phone 1006 sends feedback audio (corresponding to a remote audio signal C in FIG. 9) of the audience for audio for the audience to the live broadcast mobile phone 1001. The live broadcast mobile phone mixes the audio A for the audience and the feedback audio signal C to generate an audio signal for listening (corresponding to a signal B in FIG. 9), and sends the audio signal for listening to the Bluetooth headset 1005b by using the Bluetooth module.

Specifically, first, the live broadcast mobile phone 1001 is connected to the audio card 1002 through wired communication, and receives, through wired communication, the audio signal for publishing (the signal A in the figure) that is sent by the audio card 1002. This corresponds to step S120 in FIG. 8(a).

There are two manners in which the live broadcast mobile phone 1001 receives the accompaniment audio and the streamer audio from the audio card 1002.

Manner 1: The audio signal for publishing that is generated by the audio card 1002 is a digital signal. The audio card 1002 is connected to the live broadcast mobile phone 1001 in a digital input manner.

For example, the audio card 1002 can provide a digital audio signal, and is equipped with a USB connector. The USB connector is inserted into a USB interface of the live broadcast mobile phone 1001. The live broadcast mobile phone 1001 receives, by using a USB data channel, the audio signal for publishing that is provided by the audio card 1002, and transfers the audio signal for publishing to the AP.

Manner 2: The audio signal for publishing that is generated by the audio card 1002 is an analog signal. The audio card 1002 is connected to the live broadcast mobile phone 1001 in an analog input manner. The analog audio signal is converted into a digital audio signal by using the underlying codec (Codec) of a system of the live broadcast mobile phone 1001, and the live broadcast mobile phone 1001 sends the digital audio signal to the audience mobile phone 1006.

For example, the audio card 1002 is inserted into a 3.5 mm headset jack of the live broadcast mobile phone 1001 by using a 3.5 mm headset connector (a wired headset, which may also be referred to as an analog headset), and the live broadcast mobile phone 1001 transfers, to the codec, an audio signal for publishing that is an analog signal from the audio card 1002. After ADC sampling in the codec, the audio signal for publishing that is the analog signal is converted into an audio signal for publishing that is a digital signal. The audio signal for publishing (signal A in the figure) is input to the AP through a bus (such as an I2S bus, inter-integrated circuit sound bus, or a SLIMbus, serial low-power inter-chip media bus).

Then, the AP sends the audio signal for publishing to the audience mobile phone 1006 by using the communications module. This corresponds to step S130 in FIG. 8(a).

The live broadcast mobile phone 1001 transmits the audio signal for publishing to the communications module by using the AP, to send the audio signal for publishing to the streaming server by using the communications module, so that the audience mobile phone 1006 plays the audio signal. In this way, the live broadcast mobile phone 1001 publishes the audio signal for publishing by using the live broadcast application.

Then, the live broadcast mobile phone 1001 receives a feedback audio signal (the signal C in FIG. 9) from the audience as a feedback. This corresponds to step S140 in FIG. 8(a).

Specifically, the cellular or network communications module receives the feedback audio signal from the audience mobile phone 1006 through the internet, and the AP receives the feedback audio signal from the cellular or network communications module. In this way, the live broadcast mobile phone 1001 receives the feedback audio signal from the audience.

Then, the live broadcast mobile phone 1001 performs audio mixing on the audio signal for publishing and the feedback audio signal, to generate an audio signal for listening (the signal B in the figure). This corresponds to step S150 in FIG. 8(a).

The live broadcast mobile phone 1001 performs, by using the AP, audio mixing on the audio signal for publishing that is from the audio card 1002 and the feedback audio signal from the audience mobile phone 1006, to generate the audio signal for listening.

Then, the live broadcast mobile phone 1001 is connected to the Bluetooth headset 1005b through Bluetooth communication, and sends the audio signal for listening to the Bluetooth headset 1005b through Bluetooth communication, to implement listening on the Bluetooth headset 1005b. This corresponds to step S160 in FIG. 8(a).

The live broadcast mobile phone 1001 sends the audio signal for listening to the Bluetooth headset 1005b by using the AP and the Bluetooth module, so that the streamer can listen to the audio signal for listening by using the Bluetooth headset 1005b.

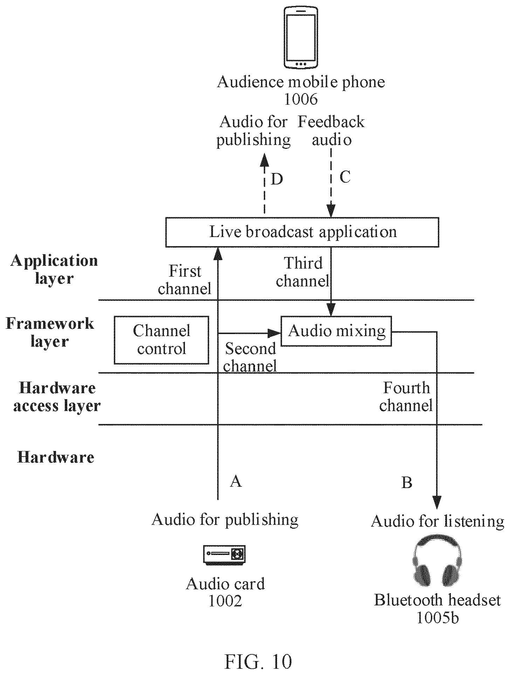

Then, an implementation process of the audio processing method in the live broadcast mobile phone 1001 according to this application in an operating system is further described in detail with reference to a function module diagram of the live broadcast mobile phone 1001 in FIG. 10.

As shown in FIG. 10, the operating system of the live broadcast mobile phone 1001 includes an application layer, a framework layer, and a hardware access layer. An application (a live broadcast application) is disposed at the application layer, a channel control module and an audio mixing module are disposed at the framework layer, and hardware is accessed by using the hardware access layer.

Hardware on a streamer side includes the audio card 1002, the live broadcast mobile phone 1001, and the Bluetooth headset 1005b. Hardware on an audience side includes the audience mobile phone 1006.

After the live broadcast application is started, the operating system notifies the channel control module of start information, and the channel control module determines whether the Bluetooth headset 1005b and the analog headset are successfully connected. When determining that the Bluetooth headset 1005b is successfully paired and the audio card 1002 is wiredly connected to the live broadcast mobile phone 1001, the channel control module enables the audio mixing module to perform audio mixing, and establishes a first channel, a second channel, a third channel, and a fourth channel.

The first channel is used to send, to the live broadcast application for publishing, the audio signal for publishing that is from the audio card 1002, so that the audience mobile phone 1006 plays the audio signal.

The second channel is used to send the audio signal for publishing that is from the audio card 1002 to the audio mixing module, and the audio mixing module processes the audio signal at the framework layer.

The third channel is used by the live broadcast application to send the feedback audio signal received from the audience mobile phone 1006 through the internet to the audio mixing module, and the audio mixing module processes the feedback audio signal at the framework layer.

The audio mixing module performs audio mixing on the audio signal for publishing and the feedback audio signal to obtain the audio signal for listening.

The fourth channel is used to send, to the Bluetooth headset 1005b through a Bluetooth network, the audio signal for listening that is obtained by the audio mixing module by mixing the audio signal for publishing and the feedback audio signal. Therefore, a listening function of the Bluetooth headset 1005b on the streamer side can be implemented.

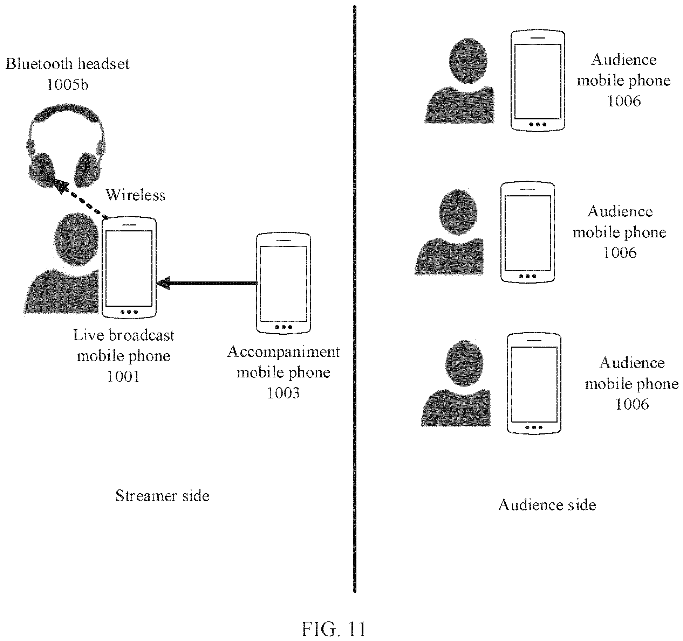

An audio processing method and an audio processing system for implementing the audio processing method according to another embodiment of this application are described below with reference to FIG. 11 to FIG. 14. Different from the foregoing embodiment, according to this embodiment, not only a listening function of the Bluetooth headset 1005b is enabled, but also a sound pickup function of the Bluetooth headset 1005b is enabled. To be specific, after streamer audio is picked up by the Bluetooth headset 1005b, the streamer audio is sent to the live broadcast mobile phone 1001 through Bluetooth communication for audio mixing.

Specifically, as shown in FIG. 11, the audio processing system for implementing the audio processing method in this embodiment includes a live broadcast mobile phone 1001, an accompaniment mobile phone 1003, an audience mobile phone 1006, and a Bluetooth headset 1005b.

The live broadcast mobile phone 1001 is used as an example of an electronic device, and the accompaniment mobile phone 1003 is used as an example of an accompaniment audio providing device.

The live broadcast mobile phone 1001 is configured to start an application to publish audio to the audience mobile phone 1006 by using the application, and receive a feedback from the audience mobile phone 1006.

The live broadcast mobile phone 1001 is wiredly connected to the accompaniment mobile phone 1003, to receive, through wired communication, an accompaniment audio signal sent by the accompaniment mobile phone 1003.

The live broadcast mobile phone 1001 is in a Bluetooth communication connection to the Bluetooth headset 1005b, and receives a streamer audio signal by using the Bluetooth headset 1005b.

The live broadcast mobile phone 1001 performs audio mixing on the accompaniment audio signal and the streamer audio signal to obtain an audio signal for publishing, sends the audio signal for publishing to the audience mobile phone 1006 that is connected to the live broadcast mobile phone 1001 by using a wireless network, and receives a feedback audio signal (that is, an audience audio signal) that reflects feedback audio and that is from the audience mobile phone 1006.

In addition, the live broadcast mobile phone 1001 further performs audio mixing on the audio signal for publishing and the feedback audio signal to generate an audio signal for listening, and sends the audio signal for listening to the Bluetooth headset 1005b by using a Bluetooth communication network, to implement a listening function.

In other words, different from the foregoing embodiments described with reference to FIG. 5 to FIG. 10, according to this embodiment, the Bluetooth headset 1005b not only has a listening function, but also has a sound pickup function. The Bluetooth headset 1005b picks up streamer audio, and sends the streamer audio signal to the live broadcast mobile phone 1001 through Bluetooth communication. The live broadcast mobile phone performs audio mixing based on the streamer audio signal and publishes a mixed audio signal to an audience side.

To implement the sound pickup function and the listening function of the Bluetooth headset 1005b, similarly, after the live broadcast mobile phone 1001 starts an application, an audio channel configuration needs to be modified to allow to enable a wired headset and the Bluetooth headset 1005b at the same time. For a specific implementation, refer to the foregoing description of FIG. 8, and detailed descriptions are omitted herein.

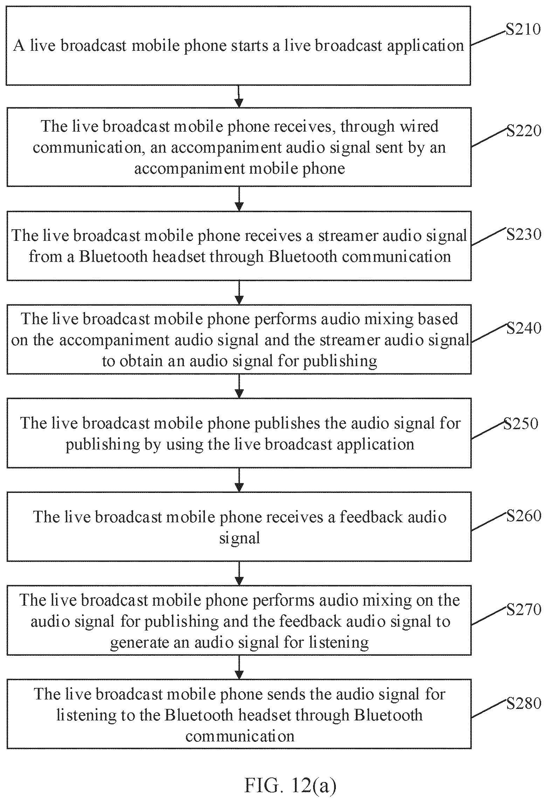

Accordingly, as shown in FIG. 12(a), the audio processing method implemented by using the audio processing system includes the following steps.

Step S210: The live broadcast mobile phone 1001 starts a live broadcast application. For details of the live broadcast application, refer to the foregoing embodiment. Detailed descriptions are omitted herein.

Step S220: The live broadcast mobile phone 1001 receives, through wired communication, an accompaniment audio signal sent by the accompaniment mobile phone 1003. Specifically, the accompaniment mobile phone 1003 is connected to the live broadcast mobile phone 1001 by using a wired audio interface, so that the live broadcast mobile phone 1001 receives, through wired communication, the accompaniment audio signal sent by the accompaniment mobile phone 1003.

Step S230: The live broadcast mobile phone 1001 receives a streamer audio signal from the Bluetooth headset 1005b through wireless communication. Specifically, the Bluetooth headset 1005b receives the streamer audio signal, and sends the streamer audio signal to the live broadcast mobile phone 1001 through Bluetooth communication.

In other words, in this embodiment, different from the foregoing embodiment, the streamer audio signal is picked up by using the Bluetooth headset 1005b, and is transmitted to the live broadcast mobile phone 1001 through Bluetooth communication. Therefore, compared with the foregoing implementation, the audio card 1002 does not need to be specially equipped, and audio mixing is directly performed on the accompaniment audio signal and the streamer audio signal by using an audio mixing module in the live broadcast mobile phone 1001. In this way, devices and connection lines are further reduced.

In addition, when the Bluetooth headset 1005b is used to collect a sound, because the Bluetooth headset 1005b is worn on an ear and a position of the Bluetooth headset 1005b is basically fixed, the Bluetooth headset 1005b is very close to a human mouth, and a relative position of the Bluetooth headset 1005b and the human mouth is basically fixed. This shows a unique advantage of collecting a human voice by using the TWS headset. Sound pickup by using the Bluetooth headset 1005b may be implemented according to an existing method. For example, sound pickup is performed by using a hidden microphone of the Bluetooth headset 1005b. Detailed descriptions are omitted herein.

Step S240: The live broadcast mobile phone 1001 performs audio mixing based on the accompaniment audio signal and the streamer audio signal to obtain an audio signal for publishing.

Step S250: The live broadcast mobile phone 1001 publishes, by using the application, the audio signal for publishing. To be specific, the live broadcast mobile phone 1001 publishes the audio signal for live broadcast by using the live broadcast application, to push a stream to a streaming server. The audience mobile phone 1006 pulls a stream from the streaming server by using the internet, and plays the audio signal for publishing.

Step S260: The live broadcast mobile phone 1001 receives a feedback audio signal by using the live broadcast application. Specifically, the audience mobile phone 1006 receives the audio signal for publishing by using the application, and sends the feedback audio signal to the live broadcast mobile phone 1001 through a wireless network.

Step S270: The live broadcast mobile phone 1001 performs audio mixing on the audio signal for publishing and the feedback audio signal to generate an audio signal for listening.

Step S280: The live broadcast mobile phone 1001 sends the audio signal for listening to the Bluetooth headset 1005b through Bluetooth communication.

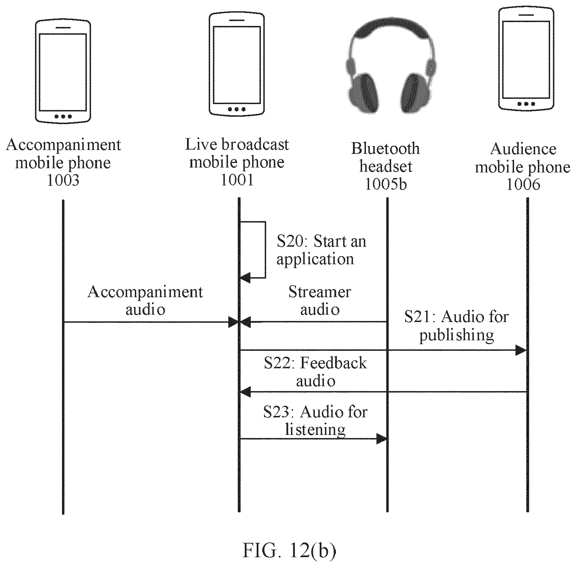

The foregoing steps can be more intuitively understood by using FIG. 12(b).

Step S20: The live broadcast mobile phone 1001 first starts an application. Then, the live broadcast mobile phone 1001 obtains accompaniment audio by using the accompaniment mobile phone 1003, and picks up streamer audio by using the Bluetooth headset 1005b. Step S21: The live broadcast mobile phone 1001 mixes the two pieces of audio to form an audio signal for publishing. Step S22: The live broadcast mobile phone 1001 transmits the audio signal for publishing to the audience mobile phone 1006 by using the application. Step S23: Receive a feedback audio signal from the audience mobile phone 1006. Step S24: The live broadcast mobile phone sends, to the Bluetooth headset 1005b through Bluetooth communication, an audio signal for listening that is formed by mixing the audio signal for publishing and the feedback audio signal.

In other words, in this implementation, the audio mixing module performs audio mixing two times. To be specific, audio mixing is performed on the accompaniment audio signal and the streamer audio signal to obtain the audio signal for publishing, and the audio signal is provided for the audience mobile phone 1006. In addition, the audio signal for publishing is further mixed with the audience audio signal from the audience mobile phone 1006, and a mixed audio signal is provided for the streamer for listening by using the Bluetooth module.

According to this embodiment, the Bluetooth headset 1005b is used for listening and sound pickup, an input is the audio signal for listening, and an output is the streamer audio. Because the Bluetooth headset 1005b is worn on an ear and a position of the Bluetooth headset 1005b is basically fixed, the Bluetooth headset 1005b is very close to a human mouth, and a relative position of the Bluetooth headset 1005b and the human mouth is basically fixed. This shows a unique advantage of collecting a human voice by using the Bluetooth headset 1005b. Therefore, the streamer can perform live broadcast with fewer electronic devices. The streamer needs to carry only the live broadcast mobile phone 1001, the accompaniment audio providing device, and the Bluetooth headset 1005b for live broadcast, and only the accompaniment mobile phone 1003 and the live broadcast mobile phone 1001 are wiredly connected, so that a quantity of wired connections is small, portability is further improved, and a live broadcast effect is good without a delay. This avoids problems such as a large quantity of devices and complex connection lines in FIG. 2(a) and a problem that there is a delay difference and it is difficult for a user to sense the delay difference in FIG. 2(b), which directly affects the live broadcast effect.

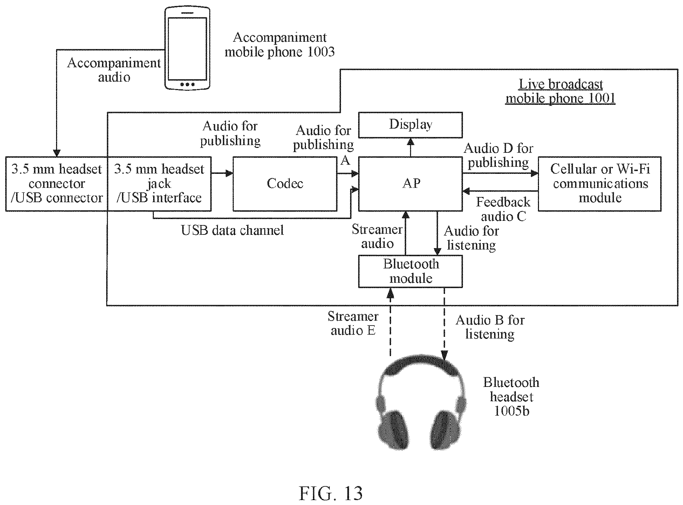

With reference to FIG. 13, the following describes signal transfer between electronic devices in the foregoing audio processing method.

A system shown in FIG. 13 for implementing the audio processing method according to this application includes the hardware shown in FIG. 11. Further, FIG. 13 shows that the live broadcast mobile phone 1001 includes an application processor (AP), a communications module (cellular or Wi-Fi communications module), a Bluetooth module, a codec (Codec), and a display module.

After an application is started (that is, step S210), the accompaniment mobile phone 1003 plays music or a background sound to provide accompaniment audio, the Bluetooth headset 1005b collects a human voice of a streamer to provide streamer audio, and the Bluetooth headset 1005b and the accompaniment mobile phone 1003 output the audio to the live broadcast mobile phone 1001, to mix the audio into audio for the audience. The live broadcast mobile phone 1001 sends the audio for the audience to the audience. The audience mobile phone 1006 sends feedback audio of the audience for the audio for the audience to the live broadcast mobile phone. The live broadcast mobile phone mixes the audio for the audience and the feedback audio to generate audio for listening, and sends the audio for listening to the Bluetooth headset 1005b.

First, the live broadcast mobile phone 1001 is connected to the accompaniment mobile phone 1003 through wired communication, and receives, through wired communication, the accompaniment audio signal (the signal A in the figure) that is sent by the accompaniment mobile phone 1003. This corresponds to step S220 in FIG. 12(a).

Similar to the foregoing embodiment, the accompaniment audio signal received by the live broadcast mobile phone 1001 from the accompaniment mobile phone 1003 may be an analog signal or a digital signal. For specific signal processing, refer to the processing of the audio signal for publishing in the foregoing embodiment. Detailed descriptions are omitted herein.

Then, the live broadcast mobile phone 1001 is connected to the Bluetooth headset 1005b through Bluetooth communication, and receives the streamer audio signal (a signal E in the figure) by using the Bluetooth headset 1005b. This corresponds to step S230 in FIG. 12(a).

The live broadcast mobile phone 1001 receives the streamer audio signal by using the Bluetooth module, and inputs the streamer audio signal to the AP.

Then, the live broadcast mobile phone 1001 performs audio mixing on the accompaniment audio signal and the streamer audio signal to obtain the audio signal for publishing (a signal D in the figure). This corresponds to step S240 in FIG. 12(a).

The live broadcast mobile phone 1001 mixes, by using the AP, the accompaniment audio signal from the accompaniment mobile phone 1003 and the streamer audio signal from the Bluetooth headset 1005b, to obtain the audio signal for publishing.

Then, the live broadcast mobile phone 1001 is connected to the audience mobile phone 1006 by using the application through a wireless network, and sends the audio signal for publishing to the audience mobile phone 1006. This corresponds to step S250 in FIG. 12(a).

The audience mobile phone 1006 receives, by using the application, the audio signal for publishing, and sends a feedback audio signal (a signal C in the figure) that reflects a feedback to the live broadcast mobile phone 1001 through a wireless network. This corresponds to step S260 in FIG. 12(a).

The live broadcast mobile phone 1001 transmits the audio signal for publishing to the communications module by using the AP, and the communications module sends the audio signal for publishing to the audience mobile phone 1006. In this way, the live broadcast mobile phone 1001 sends the audio signal for publishing to the audience mobile phone 1006.

The wireless communications module receives the feedback audio signal from the audience mobile phone 1006, and the AP receives the feedback audio signal from the wireless communications module. In this way, the live broadcast mobile phone 1001 receives the feedback audio signal from the audience.

Then, the live broadcast mobile phone 1001 performs audio mixing on the audio signal for publishing and the feedback audio signal, to generate an audio signal for listening (the signal B in the figure). This corresponds to step S270 in FIG. 12(a).

The live broadcast mobile phone 1001 performs, by using the AP, audio mixing on the audio signal for publishing and the feedback audio signal from the audience mobile phone 1006, to generate the audio signal for listening.

Finally, the live broadcast mobile phone 1001 sends the audio signal for listening to the Bluetooth headset 1005b. This corresponds to step S280 in FIG. 12(a).

The live broadcast mobile phone 1001 sends the audio signal for listening to the Bluetooth module by using the AP, and the Bluetooth module sends the audio signal for listening to the Bluetooth headset 1005b, so that the streamer can listen to the audio signal for listening by using the Bluetooth headset 1005b.

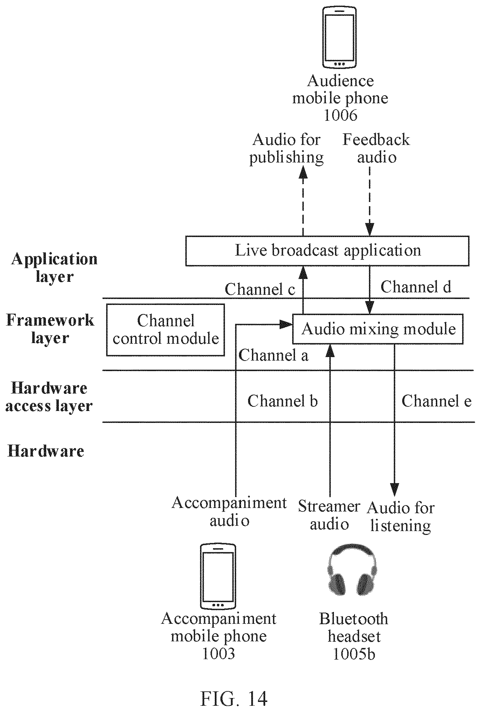

With reference to FIG. 14, the following describes a working procedure in the audio processing method implemented by the live broadcast mobile phone 1001.

An operating system of the live broadcast mobile phone 1001 includes an application layer, a framework layer, and a hardware access layer. An application (a live broadcast application) is disposed at the application layer, a channel control module and an audio mixing module are disposed at the framework layer, and hardware is accessed by using the hardware access layer. Hardware on a streamer side includes the accompaniment mobile phone 1003, the live broadcast mobile phone 1001, and the Bluetooth headset 1005b. Hardware on an audience side includes the audience mobile phone 1006.

When determining that Bluetooth is successfully paired and the accompaniment mobile phone 1003 is wiredly connected to the live broadcast mobile phone 1001, the channel control module enables the audio mixing module to perform audio mixing, and establishes a channel a, a channel b, a channel c, a channel d, and a channel e. In this way, a sound pickup function and a listening function of the Bluetooth headset 1005b are implemented.

The channel a is used to send the accompaniment audio signal from the accompaniment mobile phone 1003, that is, the accompaniment audio signal from the wired audio interface, to the audio mixing module.

The channel b is used to send the streamer audio signal from the Bluetooth headset 1005b, that is, the streamer audio signal from the wireless audio interface, to the audio mixing module.

The channel c is used to send, from the audio mixing module to the live broadcast application, the audio signal for publishing that is obtained by the audio mixing module by performing audio mixing based on the accompaniment audio signal and the streamer audio signal, to send the audio signal for publishing to the audience mobile phone 1006 through the internet.

The channel d is used by the live broadcast application to send the feedback audio signal received from the audience mobile phone 1006 through the internet to the audio mixing module.

The channel e is used to send, to the wireless audio interface, the audio signal for listening that is obtained by the audio mixing module by performing audio mixing based on the audio signal for publishing and the feedback audio signal, to send the audio signal for listening to the Bluetooth headset 1005b through Bluetooth communication.

In the foregoing embodiments, the live broadcast mobile phone 1001 is used as an example of an electronic device. The accompaniment mobile phone 1003 is an example of an accompaniment audio providing device. The microphone 1004 is an example of a sound collection apparatus. Both the microphone 1004 and the accompaniment mobile phone 1003 are wiredly connected to the audio card 1002. The audio signal for publishing is an example of a first audio signal, the feedback audio signal is an example of a second audio signal, and the audio signal for listening is an example of a third audio signal.

In the accompanying drawings, some structural or method features may be shown in a particular arrangement and/or order. However, it should be understood that such a particular arrangement and/or order may not be required. Instead, in some embodiments, these features may be arranged in a manner and/or order different from those shown in the accompanying drawings of the specification. In addition, including structural or method features in a particular diagram does not imply that such features are needed in all embodiments, and in some embodiments, these features may not be included or may be combined with other features.

It should be noted that all units/modules mentioned in the device embodiments of this application are logical units/modules. Physically, one logical unit/module may be one physical unit/module, or may be a part of one physical unit/module, or may be a combination of a plurality of physical units/modules. Physical implementations of these logical units/modules are not the most important, but a combination of functions implemented by these logical units/modules is a key to resolving the technical problem in this application. In addition, to highlight the innovative part of this application, the foregoing device embodiments of this application do not introduce units/modules that are not closely related to resolving the technical problem in this application. This does not indicate that the foregoing device embodiments do not have other units/modules.

It should be noted that in the example and specification of this patent, relational terms such as first and second are only used to distinguish one entity or operation from another, and do not necessarily require or imply that any actual relationship or sequence exists between these entities or operations. Moreover, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. In a case without more restrictions, for an element limited by the statement "include a...", a process, method, article, or device that includes the element may further include another same element.

Although this application has been illustrated and described with reference to some preferred embodiments of this application, a person of ordinary skill in the art should understand that:
The foregoing descriptions are merely specific implementations of this application, but are not intended to limit the protection scope of this application. Various changes, variations, or replacements that may be made by a person skilled in the art to this application in forms and details within the technical scope disclosed in this application without departing from the spirit and scope of this application shall fall within the protection scope of this application. Therefore, the protection scope of this application shall be subject to the protection scope of the claims.

## Claims

1. An audio processing method, applied to an audio processing system, wherein the audio processing system comprises an electronic device, an accompaniment audio providing device, and a wireless headset, and the method comprises:
starting, by the electronic device, a live broadcast application, wherein the live broadcast application publishes audio, and receives feedback audio associated with the audio;
receiving, by the electronic device, an audio signal comprising an accompaniment audio signal sent by the accompaniment audio providing device, wherein the received audio signal is used as a first audio signal, or the received audio signal is processed and a processed signal is used as a first audio signal;
publishing, by the electronic device, the first audio signal by using the live broadcast application, and receiving feedback audio through the internet by using the live broadcast application, wherein the feedback audio is a second audio signal;
mixing, by the electronic device, the first audio signal and the second audio signal to obtain a third audio signal; and
sending, by the electronic device through wireless communication, the third audio signal to the wireless headset associated with the electronic device, to perform listening.

2. The audio processing method according to claim 1, wherein the audio processing system further comprises an audio processor and a sound collection apparatus, the accompaniment audio providing device and the sound collection apparatus are connected to the sound collection apparatus, the sound collection apparatus is connected to the electronic device, and the receiving, by the electronic device, an audio signal comprising an accompaniment audio signal sent by the accompaniment audio providing device, wherein the received audio signal is used as a first audio signal, or the received audio signal is processed and a processed signal is used as a first audio signal comprises:
separately receiving, by the audio processor through wired communication, the accompaniment audio signal provided by the accompaniment audio providing device and a streamer audio signal collected by the sound collection apparatus, and mixing the accompaniment audio signal and the streamer audio signal to obtain the first audio signal; and
receiving, by the electronic device through wired communication, the first audio signal provided by the audio processor.

3. The audio processing method according to claim 2, wherein the first audio signal obtained by the audio processor is a digital audio signal.

4. The audio processing method according to claim 2, wherein the first audio signal obtained by the audio processor is an analog signal, and the electronic device converts the first audio signal that is the analog signal into a first audio signal that is a digital signal, and publishes the first audio signal that is the digital signal by using the live broadcast application.

5. The audio processing method according to claim 3 or 4, wherein the electronic device comprises an audio mixing module and a channel control module; and
when the electronic device starts the live broadcast application, the channel control module enables both a wireless audio interface and a wired audio interface, and the channel control module enables the audio mixing module to perform audio mixing, and establishes a first channel, a second channel, a third channel, and a fourth channel, wherein
the first channel is used to send the first audio signal from the wired audio interface to the live broadcast application, to publish the first audio signal by using the application;
the second channel is used to send the first audio signal from the wired audio interface to the audio mixing module;
the third channel is used by the live broadcast application to send the second audio signal received through a wireless network to the audio mixing module; and
the fourth channel is used to send, to the wireless audio interface through wireless communication, the third audio signal obtained by the audio mixing module by performing audio mixing based on the first audio signal and the second audio signal, so that the wireless headset performs listening.

6. The audio processing method according to claim 1, wherein the receiving, by the electronic device, an audio signal comprising an accompaniment audio signal sent by the accompaniment audio providing device, wherein the received audio signal is used as a first audio signal, or the received audio signal is processed and a processed signal is used as a first audio signal comprises:
receiving, by the electronic device through wired communication, the accompaniment audio signal sent by the accompaniment audio providing device;
collecting, by the wireless headset, a streamer audio signal, and sending the streamer audio signal to the electronic device through wireless communication; and
performing, by the electronic device, audio mixing based on the accompaniment audio signal and the streamer audio signal, to obtain the first audio signal.

7. The audio processing method according to claim 6, wherein the accompaniment audio signal is a digital audio signal.

8. The audio processing method according to claim 6, wherein the accompaniment audio signal is an analog signal, the accompaniment audio signal that is the analog signal is converted by the electronic device into an accompaniment audio signal that is a digital signal, and the electronic device performs audio mixing based on the streamer audio signal and the accompaniment audio signal that is the digital signal.

9. The audio processing method according to claim 7 or 8, wherein the electronic device comprises an audio mixing module and a channel control module; and
when the electronic device starts the live broadcast application, the channel control module enables the electronic device to enable both a wireless audio interface and a wired audio interface, and the channel control module enables the audio mixing module to perform audio mixing, and establishes a channel a, a channel b, a channel c, a channel d, and a channel e, wherein
the channel a is used to send the accompaniment audio signal from the wired audio interface to the audio mixing module;
the channel b is used to send the streamer audio signal from the wireless audio interface to the audio mixing module;
the channel c is used to send, from the audio mixing module to the live broadcast application, the first audio signal obtained by the audio mixing module by performing audio mixing based on the accompaniment audio signal and the streamer audio signal, to publish the first audio signal through the internet;
the channel d is used by the live broadcast application to send the second audio signal received through the internet to the audio mixing module; and
the channel e is used to send, to the wireless audio interface, the third audio signal obtained by the audio mixing module by performing audio mixing based on the first audio signal and the second audio signal, to send the third audio signal through a wireless network to the wireless headset associated with the electronic device.

10. The audio processing method according to any one of claims 1 to 9, wherein the audio mixing is performed according to any audio mixing algorithm in a linear algorithm, a fixed weight algorithm, and a dynamic weight algorithm.

11. An audio processing method, applied to an electronic device and comprising:
starting a live broadcast application, wherein the live broadcast application publishes audio, and receives feedback audio associated with the published audio;
receiving an audio signal comprising an accompaniment audio signal, wherein the received audio signal is used as a first audio signal to be published by the live broadcast application, or the received audio signal is processed and a processed signal is used as a first audio signal to be published by the live broadcast application;
publishing the first audio signal by using the live broadcast application, and receiving feedback audio through the internet by using the live broadcast application, wherein the feedback audio is a second audio signal;
mixing the first audio signal and the second audio signal to obtain a third audio signal; and
transmitting the third audio signal to a wireless headset through wireless communication.

12. The audio processing method according to claim 11, wherein the receiving an audio signal comprising an accompaniment audio signal, wherein the received audio signal is used as a first audio signal, or the received audio signal is processed and a processed signal is used as a first audio signal comprises:
receiving the first audio signal through wired communication, wherein the first audio signal is obtained by mixing the accompaniment audio signal and a streamer audio signal.

13. The audio processing method according to claim 12, wherein the first audio signal is a digital audio signal.

14. The audio processing method according to claim 12, wherein the first audio signal is an analog audio signal, and the analog audio signal is converted by the electronic device into a digital audio signal for generating the published audio.

15. The audio processing method according to claim 12, wherein the electronic device comprises an audio mixing module and a channel control module; and
when the electronic device starts the live broadcast application, the channel control module enables the electronic device to enable both a wireless audio interface and a wired audio interface, and the channel control module enables the audio mixing module to perform audio mixing, and establishes a first channel, a second channel, a third channel, and a fourth channel, wherein
the first channel is used to send the first audio signal from the wired audio interface to the live broadcast application, to publish the first audio signal by using the application;
the second channel is used to send the first audio signal from the wired audio interface to the audio mixing module;
the third channel is used by the live broadcast application to send the second audio signal received through a wireless network to the audio mixing module; and
the fourth channel is used to send, to the wireless audio interface through wireless communication, the third audio signal obtained by the audio mixing module by performing audio mixing based on the first audio signal and the second audio signal, so that the wireless headset performs listening.

16. The audio processing method according to claim 11, wherein the receiving an audio signal comprising an accompaniment audio signal, wherein the received audio signal is used as a first audio signal, or the received audio signal is processed and a processed signal is used as a first audio signal comprises:
receiving the accompaniment audio signal through wired communication;
receiving a streamer audio signal through wireless communication; and
performing audio mixing based on the accompaniment audio signal and the streamer audio signal, to obtain the first audio signal.

17. The method according to claim 16, wherein the accompaniment audio signal is a digital audio signal.

18. The audio processing method according to claim 16, wherein the accompaniment audio signal is an analog audio signal, the analog audio signal is converted by the electronic device into a digital audio signal, and the electronic device performs audio mixing based on the streamer audio signal and an accompaniment audio signal that is the digital audio signal.

19. The audio processing method according to claim 16, wherein the electronic device comprises an audio mixing module and a channel control module; and
when the electronic device starts the live broadcast application, the channel control module enables the electronic device to enable both a wireless audio interface and a wired audio interface, and the channel control module enables the audio mixing module to perform audio mixing, and establishes a channel a, a channel b, a channel c, a channel d, and a channel e, wherein
the channel a is used to send the accompaniment audio signal from the wired audio interface to the audio mixing module;
the channel b is used to send the streamer audio signal from the wireless audio interface to the audio mixing module;
the channel c is used to send, from the audio mixing module to the live broadcast application, the first audio signal obtained by the audio mixing module by performing audio mixing based on the accompaniment audio signal and the streamer audio signal, to publish the first audio signal through the internet;
the channel d is used by the live broadcast application to send the second audio signal received through the internet to the audio mixing module; and
the channel e is used to send, to the wireless audio interface, the third audio signal obtained by the audio mixing module by performing audio mixing based on the first audio signal and the second audio signal, to send the third audio signal through a wireless network to the wireless headset associated with the electronic device.

20. The audio processing method according to any one of claims 11 to 19, wherein the audio mixing is performed according to any audio mixing algorithm in a linear algorithm, a fixed weight algorithm, and a dynamic weight algorithm.

21. A computer-readable storage medium, storing computer-readable code, wherein when the computer-readable code is run by one or more processors, the processor is enabled to perform the audio processing method according to any one of claims 11 to 20.

22. An electronic device, configured to publish audio by using a live broadcast application and receive feedback audio associated with the published audio, and comprising:
a wireless audio interface and a wired audio interface;
an audio signal collection module, configured to receive an audio signal comprising an accompaniment audio signal through the wireless audio interface and the wired audio interface; and
a channel control module and an audio mixing module, wherein
the channel control module is configured to: when the electronic device starts the live broadcast application, enable the wireless audio interface and the wired audio interface, and send the audio signal collected by the audio signal collection module to the audio mixing module;
the audio mixing module is configured to obtain, based on the audio signal received by the audio signal collection module, a first audio signal to be published by using the live broadcast application, and the audio mixing module is further configured to perform audio mixing based on the first audio signal and a second audio signal that is received by the live broadcast application as a feedback, to generate a third audio signal; and
the channel control module is further configured to send the third audio signal to the wireless audio interface, to transmit the third audio signal through wireless communication, so that a wireless headset associated with the electronic device performs listening.

23. The electronic device according to claim 22, wherein the electronic device comprises the audio mixing module and the channel control module;
when the electronic device starts the live broadcast application, the channel control module enables the electronic device to enable both the wireless audio interface and the wired audio interface; and
the channel control module enables the audio mixing module to perform audio mixing, and establishes a first channel, a second channel, a third channel, and a fourth channel, wherein
the first channel is used to send the first audio signal from the wired audio interface to the live broadcast application, to publish the first audio signal by using the live broadcast application;
the second channel is used to send the first audio signal from the wired audio interface to the audio mixing module;
the third channel is used by the live broadcast application to send the second audio signal received through the internet to the audio mixing module;
the audio mixing module performs audio mixing on the first audio signal and the second audio signal to obtain the third audio signal; and
the fourth channel is used to send the third audio signal from the audio mixing module to the wireless audio interface.

24. The electronic device according to claim 22, wherein the electronic device comprises the audio mixing module and the channel control module;
when the electronic device starts the live broadcast application, the channel control module enables the electronic device to enable both the wireless audio interface and the wired audio interface; and
the channel control module enables the audio mixing module to perform audio mixing, and establishes a channel a, a channel b, a channel c, a channel d, and a channel e, wherein
the channel a is used to send the accompaniment audio signal from the wired audio interface to the audio mixing module;
the channel b is used to send a streamer audio signal from the wireless audio interface to the audio mixing module;
the channel c is used to send, from the audio mixing module to the live broadcast application, the first audio signal obtained by the audio mixing module by performing audio mixing based on the accompaniment audio signal and the streamer audio signal, to publish the first audio signal through the internet;
the channel d is used by the live broadcast application to send the second audio signal received through a wireless network to the audio mixing module; and
the channel e is used to send, to the wireless audio interface, the third audio signal obtained by the audio mixing module by performing audio mixing based on the first audio signal and the second audio signal, to send the third audio signal to the wireless headset through the wireless network.

25. The electronic device according to any one of claims 22 to 24, wherein the audio mixing module performs audio mixing according to any audio mixing algorithm in a linear algorithm, a fixed weight algorithm, and a dynamic weight algorithm.
